# EUROPEAN PATENT APPLICATION

(11) **EP 1 621 419 A2**
(43) Date of publication of application: **01.02.2006**
(21) Application number: 05009221.2
(22) Date of filing: 27.04.2005
(51) Int. Cl.: B60R 22/343

(54) **Locking system, seatbelt retractor and seatbelt system incorporating the locking system**

(30) Priority: 28.07.2004 JP 2004219934; 28.07.2004 JP 2004219935; 29.10.2004 JP 2004316142; 22.03.2005 JP 2005082104
(71) Applicant: TAKATA CORPORATION, Minato-ku, Tokyo 106-8510 (JP)
(72) Inventor: Kitazawa, Kenji, Minato-ku Tokyo 106-8510 (JP); Hiramatsu, Koji, Minato-ku Tokyo 106-8510 (JP)
(74) Representative: Vossius & Partner

(57) **Abstract**

To set the limit load applied to seatbelts more flexibly and variously depending on the situation of emergency.

When the gas generated from a gas generator (25) in a crash is introduced into a pressure chamber (24), a pressure piston (22) and a pressure rod (23) move to the right, so that the end (23a) of the pressure rod (23) comes into pressure contact with a seatbelt (3). The seatbelt (3) is pushed between the pressure rod (23) and a belt receiver (30). At that time, the movement of the pressure piston (22) is controlled by a piston-movement limit member (26) depending on the situation of emergency, thereby varying the pressure to the seatbelt (3). Thus, the limit load applied to the seatbelt (3) can be set flexibly and variously depending on the situation of emergency.

## Description

The present invention relates to the technical field of a seatbelt retractor for retracting a seatbelt extractably and, more particularly, it relates to a seatbelt retractor having an energy absorption mechanism (hereinafter, referred to as an EA mechanism) for absorbing energy applied to an occupant with s seatbelt fastened by limiting a load applied to the seatbelt by torsional deformation of a torsion bar when high deceleration is applied to a vehicle in an emergency such as a crash, and also relates to the technical field of a seatbelt system having the same.

Conventional seatbelt systems mounted to vehicles such as cars prevent occupants from flying out of seats by restraining the occupants with seatbelts in the aforesaid emergency, thereby protecting the occupants.
Such seatbelt systems have a seatbelt retractor for retracting a seatbelt. With the seatbelt retractors, seatbelts are retracted on a spool when not fastened but, when fastened, they are retracted and worn on the occupants. In the emergency described above, the locking mechanism of the seatbelt retractors is activated to prevent the rotation of the spool in the belt extracting direction, thereby preventing the extraction of the seatbelts. Thus, the seatbelt ensures the restraint of occupants to protect them in an emergency.

With the seatbelt retractors of the conventional seatbelt systems, the occupants move forward by a large inertial force because of significant vehicle deceleration generated when the seatbelts restrain the occupants to protect them in an emergency such as a car crash. Accordingly, the seatbelts are subjected to a great load and so the occupants receive a significant impact from the seatbelts. It is therefore desirable to limit the impact applied to the occupants, although it is not so serious problem for the occupants.

Accordingly, seatbelt retractors have been developed which have a torsion bar to absorb and ease impact energy by limiting a load applied to a seatbelt in an emergency in a seatbelt fastened condition. (For example, refer to Patent Document 1)
Fig. 31 is a longitudinal sectional view of an example of a seatbelt retractor disclosed in Patent Document 1. In the drawing, reference numeral 1 denotes a seatbelt retractor; numeral 2, a U-shaped frame; numeral 3, a seatbelt; numeral 4, a spool supported rotationally between both side walls of the frame 2, for retracting the seatbelt 3; numeral 5, deceleration detection means activated by detecting high vehicle deceleration generated in the aforesaid emergency; numeral 6, a locking mechanism activated by the deceleration detection means 5 to prevent at least the rotation of the spool 4 in the belt extracting direction; numeral 7, a torsion bar fitted and passed through with play in the center of the spool 4 in the direction of the axis, for rotationally connecting the spool 4 and the locking mechanism 6; numeral 8, spring means for normally biasing the spool 4 via a bush 10 in the belt retracting direction by the spring force of a spiral spring 9; numeral 11, a pretensioner activated in the emergency to generate a belt retracting torque; and numeral 12, a bush for transmitting the seatbelt retracting torque of the pretensioner 11 to the spool 4.

The locking mechanism 6 has a locking base 14 (corresponding to a locking member of the present invention) which can rotate with a first torque transmission portion 17 of the torsion bar 7 and which retains a pawl 13 such that it can rock, the torsion bar 7 having a lock gear 6a which rotates with the torsion bar 7 under normal conditions and stops at the activation of the deceleration detection means 5 in an emergency to generate relative rotation difference between it and the torsion bar 7 to bring the pawl 13 into engagement with an internal gear 19 on the side wall of the frame 2, thereby stopping the rotation of the locking base 14 in the seatbelt extracting direction. The locking base 14 has a male screw shaft 15. Into the male screw shaft 15, a nut-like stopper 16 which rotates with the spool 4 is screwed.
The torsion bar 7 also has the first torque transmission portion 17 which is in engagement with the locking base 14 such that it cannot rotate relative thereto and has a second torque transmission portion 18 which is in engagement with the spool 4 such that it cannot rotate relative thereto.

The spool 4 is normally biased in the seatbelt retracting direction by the spring force of the spring means 8 via the bush 10, the torsion bar 7, the second torque transmission portion 18 of the torsion bar 7, and a bush 12. A belt retracting torque generated in the pretensioner 11 is transmitted to the spool 4 via the bush 12 during the operation of the pretensioner 11 and thus the spool 4 retracts the seatbelt 3 by a specified amount.

The conventional retractor 1 with such a structure completely retracts the seatbelt 3 by the basing force of the spring means 8 when the seatbelt 3 is not fastened. When the seatbelt 3 is extracted at a normal speed to wear it, the spool 4 rotates in the seatbelt extracting direction to extract the seatbelt 3 smoothly. After a tongue (not shown) which is provided slidably to the seatbelt 3 has been retained in a buckle (not shown) fixed to the vehicle body, the seatbelt 3 which is extracted excessively is retracted by the spool 4 by the biasing force of the spring means 8 and as such, the seatbelt 3 is fitted in such a degree that applies no feeling of pressure.

The seatbelt retracing torque generated by the pretensioner 11 is transmitted to the spool 4 in the emergency. The spool 4 retracts the seatbelt 3 by a specified amount to firmly restrain the occupant. On the other hand, the deceleration detection means 5 is activated by large deceleration generated in the emergency to activate the locking mechanism 6. In other words, the rotation of the lock gear 6a in the seatbelt extracting direction is stopped by the activation of the deceleration detection means 5, so that the pawl 13 of the locking mechanism 6 is rotated to come into engagement with the internal gear 19 on the side wall of the frame 2. This stops the rotation of the locking base 14 in the seatbelt extracting direction and so, the torsion bar 7 is twisted and only the spool 4 rotates relative to the locking base 14 in the seatbelt extracting direction. Thereafter, the spool 4 rotates in the seatbelt extracting direction while twisting the torsion bar 7. Thus, the load applied to the seatbelt 3 is limited by the torsional torque of the torsion bar 7 and so the impact applied to the occupant is absorbed and eased.

Since the spool 4 rotates relative to the locking base 14, the stopper 16 which rotates with the spool 4 rotates relative to the screwed male screw shaft 15. Thus, the stopper 16 moves toward the locking base 14. When the stopper 16 comes into contact with the locking base 14, further rotation of the stopper 16 is stopped and so the rotation of the spool 4 is also stopped, so that the torsion of the torsion bar 7 stops. Thus, the extraction of the seatbelt 3 is prevented and so the occupant is securely restrained by the seatbelt 3 and the maximum torsion of the torsion bar 7 is limited and so the torsion bar 7 is prevented from being cut off by torsion.

The conventional retractor 1 is constructed such that the locking base 14 of the locking mechanism 6 rotates relative to the lock gear 6a in the seatbelt extracting direction even in sudden extraction of the seatbelt. Accordingly, the pawl 13 of the locking mechanism 6 is brought into engagement with the internal gear 19 on the side wall of the frame 2 to prevent the rotation of the locking base 14. Therefore, the rotation of the spool 4 is prevented via the torsion bar 7 and so the extraction of the seatbelt is stopped.

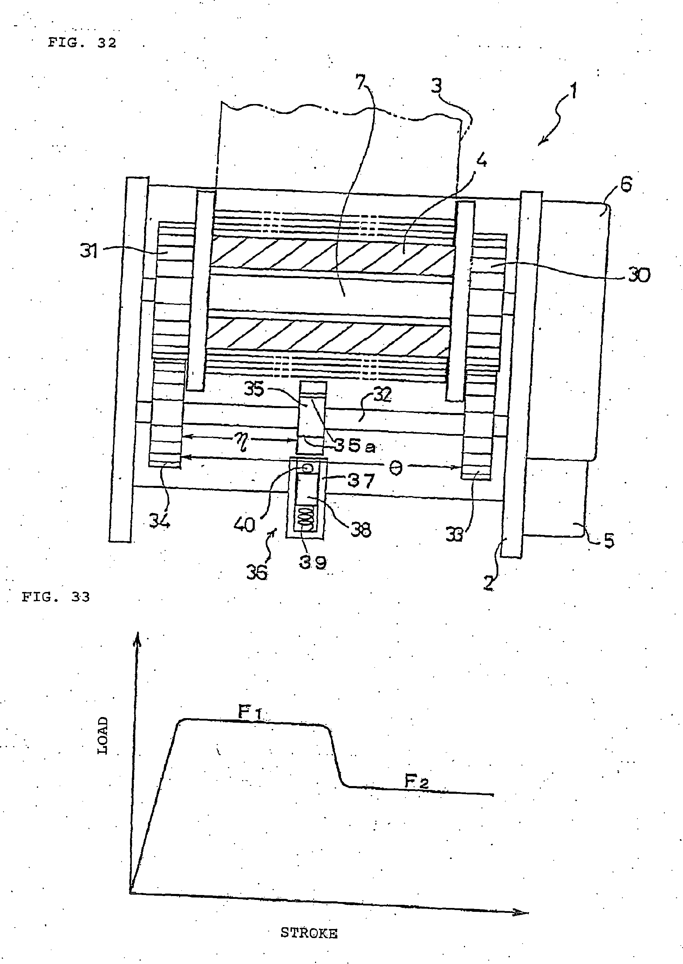

Furthermore, Patent Document 1 discloses the retractor 1 in which the limit load (FL) can be switched. Specifically, as shown in Fig. 32, a lock pin 40 of an EA-load switching mechanism 36 normally prevents a locking member 38 from ejecting from a cylinder 37. When the rotation of the locking base in the seatbelt extracting direction is stopped at a great impact when the pretensioner is activated, also the rotation of a gear 30 provided to the locking base in the same direction is stopped. Thus the rotation of a gear 33 which is normally in engagement with the gear 30 is also stopped. Since the seatbelt 3 is extracted by the inertial force of the occupant, the spool 4 continues to rotate in the seatbelt extracting direction. Therefore, a gear 31 provided rotatably with the spool 4 also rotates in the same direction and a gear 34 which is normally in engagement with the gear 31 also rotates.

On the other hand, in the initial stage after the great crash, the locking member 38 is ejected from the cylinder 37 by the spring force of a spring 39 because the lock pin 40 is pushed away by the exhaust gas from the pretensioner. Then a ratchet claw 35a of a lock wheel 35 comes into engagement with the locking member 38, thereby stopping the rotation of the lock wheel 35 in the seatbelt extracting direction. Therefore, a second torsion bar 32 is twisted at the portion of a length η shorter than the entire length θ thereof. Thus, the EA operation by the EA mechanism is started by the torsion of the first torsion bar 7 and the torsion of the portion η of the second torsion bar 32, where FL load F₁ at that time is relatively high, as shown in Fig. 33. In the stage following the initial stage, the portion η of the second torsion bar 32 is twisted by a specified amount to be broken. After the second torsion bar 32 has been broken, only the first torsion bar 7 is twisted to allow EA operation, where FL load F₂ at that time is lower than that in the initial stage, as shown in Fig. 33. In that way, the FL load is switched to allow the limit road applied to the seatbelt to be set flexibly in various levels depending on the occupant restraint condition with an airbag etc. in an emergency.

The conventional EA mechanisms also include an EA mechanism in which a wire rod provided on the locking base side is rubbed with an engage pin provided on the spool side (e.g., refer to Patent Document 2), an EA mechanism in which a belt-like plate one end of which is provided on the spool side is forced to be deformed with a guide groove provided on the locking base side (e.g., refer to Patent Document 3), an EA mechanism in which a cylinder provided to the spool is elastically deformed by a retaining portion provided to the locking base (e.g., refer to Patent Document 4), an EA mechanism in which a U-shaped flat plate material one end of which is provided on the locking base side and the other end is in engagement with the spool side is deformed (e.g., refer to Patent Document 5), an EA mechanism in which a shear pin provided between the spool and the locking base is sheared when the rotation of the locking base is locked in an emergency (e.g., refer to Patent Document 6), and an EA mechanism in which a portion on the spool side is cut with a cutting edge provided on the locking base side (e.g., refer to Patent Document 6).
Patent Document 1: JP-A-2001-58559
Patent Document 2: JP-A-2002-53007
Patent Document 3: JP-A-2000-85527
Patent Document 4: JP-A-2002-53008
Patent Document 5: JP-A-10-258702
Patent Document 6: JP-A-2001-106025

However, with the seatbelt retractor 1 disclosed in Patent Document 1, although the limit load can be set to various values depending on the occupant restraint conditions, only one limit load is set in the initial stage after a crash. In this initial stage after the crash, impact energy applied to the occupant is large, which varies depending on the physique of the occupant, such as weight, seat-slide position, crash speed, crash acceleration or deceleration, the state of the crash. Thus, it is difficult to restrain the occupant effectively and appropriately if coping with the different significant impact energies in the initial stage with only one limit load.

The present invention has been made in consideration or the above problems. Accordingly, it is an object of the present invention to provide a seatbelt retractor in which the limit load applied to a seatbelt can be set to various levels more flexibly depending on the condition of the emergency and a seatbelt system including the same.

In order to solve the above problems, a seatbelt retractor of the invention includes: at least a spool for retracting a seatbelt; a locking mechanism including a locking member that rotates normally with the spool by the transmission of the rotation of the spool via a rotation transmission shaft and stops the rotation in the seatbelt extracting direction; and first and second seatbelt-load limit mechanisms for limiting the load applied to the seatbelt when the rotation of the locking member in the seatbelt extracting direction is stopped and the spool rotates relative to the locking member in the seatbelt extracting direction. The second seatbelt-load limit mechanism includes limit-load setting means for setting a limit load for the seatbelt and limit-load control means for controlling the limit-load setting means so as to vary the limit load of the seatbelt in an emergency. The limit load of the seatbelt may be limited depending on information on emergency situation such as occupant's physique information, seat-slide position information, crash-speed information, crash acceleration or deceleration information, and crash situation information.

In the seatbelt retractor of the invention (Claim 3), the first seatbelt-load limit mechanism is one of a load limit mechanism in which a torsion bar disposed between the spool and the locking member and constructing the rotation transmission shaft is twisted into deformation, a load limit mechanism in which a wire rod provided on one of the spool side and the locking member side is rubbed with an engage pin provided on the other of the spool side and the locking member side, a load limit mechanism in which a belt-like plate one end of which is provided on one of the spool side and the locking member side is forced to be deformed with a guide groove provided on the other of the spool side and the locking member side, a load limit mechanism in which a cylindrical member provided on one of the spool side and the locking member side is elastically deformed by a retaining portion provided on the other of the spool side and the locking member side, a load limit mechanism in which a U-shaped flat plate material or a U-shaped wire rod is deformed, one end of which is provided on one of the spool side and the locking member side and the other end is in engagement with the other of the spool side and the locking member side, a load limit mechanism in which a shear pin provided between the spool and the locking member is sheared, a load limit mechanism in which a portion provided on one of the spool side and the locking member side is cut with a cutting edge provided on the other of the spool side and the locking member side, and a load limit mechanism in which a plate-like energy absorbing member provided on one of the spool side and the locking member side is cut with a cutting projection provided on the other of the spool side and the locking member side.

In the seatbelt retractor of the invention (Claim 4), three-stages of load modes are set for the limit load, the three-stage modes being a load mode by the non-operation of the limit-load setting means, a low-load mode, and a high-load mode.

In the seatbelt retractor of the invention (Claim 5), the first seatbelt-load limit mechanism includes a rotation shaft rotating by the rotation of the rotation transmission shaft transmitted via a power transmission mechanism in an emergency, the rotation shaft having the second seatbelt-load limit mechanism. The limit-load setting means of the second seatbelt-load limit mechanism includes a predetermined number of energy absorption mechanisms. The second seatbelt-load limit mechanism includes at least one operation control member for controlling the operation of the predetermined number of energy absorption mechanisms and a drive member provided so as to correspond to the operation control member, for driving the operation control member.

In the seatbelt retractor of the invention (Claim 6), the first seatbelt-load limit mechanism includes a rotation shaft rotating by the rotation of the spool transmitted via a power transmission mechanism in an emergency, the rotation shaft having the second seatbelt-load limit mechanism. The limit-load setting means of the second seatbelt-load limit mechanism includes a predetermined number of energy absorption mechanisms. The second seatbelt-load limit mechanism includes at least one operation control member for controlling the operation of the predetermined number of energy absorption mechanisms and a drive member provided to correspond to the operation control member, for driving the operation control member.

In the seatbelt retractor of the invention (Claim 7), the power transmission mechanism includes: a spool-side gear to which the rotation of the spool at least in the seatbelt extracting direction is transmitted; a clutch mechanism disposed between the spool and the spool-side gear, the clutch mechanism normally disconnecting the spool and the spool-side gear and rotatably connecting the spool and the spool-side gear at least in the seatbelt extracting direction in the emergency; and a rotation-shaft-side gear disposed to the rotation shaft, the rotation-shaft-side gear being rotatable with the rotation shaft and normally in engagement with the spool-side gear.

In the seatbelt retractor of the invention (Claim 8), the spool-side gear is shaped like a ring including an external gear and an internal gear normally in engagement with the rotation-shaft-side gear. The clutch mechanism includes a clutch pawl supported by the spool and a shear pin supporting the clutch pawl and being sheared in an emergency. The shear pin is disposed to an interlocking member interlocking with the operation of the locking mechanism and wherein the clutch pawl is activated by the operation of the locking mechanism to come into engagement with the internal gear of the spool-side gear and to shear the shear pin, so that the rotation of the spool is transmitted to the spool-side gear.

In the seatbelt retractor of the invention (Claim 9), the limit-load setting means includes a belt-like flat plate or a wire rod including a U-shaped portion and setting the limit load by deforming the U-shaped portion toward the terminal.
In the seatbelt retractor of the invention (Claim 10), the drive member includes a gas generator or a solenoid for activating the operation control member.

In the seatbelt retractor of the invention (Claim 11), the limit-load setting means for varying the limit load sets a plurality of load-limit operation patterns, wherein in the load-limit operation patterns, the magnitude of the limit load is set depending on emergency situation such as occupant's physique, seat-slide position, crash-speed information, crash acceleration or deceleration, and crash situation.
In the seatbelt retractor of the invention (Claim 12), the limit-load setting means for varying the limit load varies the limit load of the seatbelt in advance according to the information on emergency situation that can be acquired in advance.
According to the invention, a seatbelt system (Claim 13) includes the seatbelt retractor according to one of Claims 1 to 12.

The seatbelt retractor and the seatbelt system including the same with such a structure, according to the present invention, include a programmable force limiter (PFL) that varies the limit load of a seatbelt in an emergency according to information on emergency situation such as advance information (e.g., occupant's weight information, seat-slide position information), crash prediction information, and crash severity information (e.g., crash speed information, crash acceleration or deceleration information, and crash situation information). Accordingly, the limit load of the seatbelt in a crash can be set more flexibly and variously according to emergency information such as crash situation and the size of the occupant. Thus the occupant can be protected in a crash more effectively and appropriately.

According to the invention (Claim 3), the seatbelt-load limit mechanism can be manufactured easily at low cost, since the conventional load limit mechanism with a simple structure is used.
According to the invention (Claim 4), the limit load can be set more easily depending on the situation of the crash and the size of the occupant, since three-stage load modes are set.

According to the invention (Claims 5 to 10), an appropriate limit load can be obtained depending on the situation of the emergency and the size of the occupant with a simple structure of the two first and second limit-load setting means. In that case, according to the invention of Claims 7 and 8, a clutch mechanism can be housed inside the inner periphery of a ring-shaped spool-side gear. Accordingly, the power transmission mechanism and the clutch mechanism can be made compact at low cost.

According to the invention of Claim 9, the energy absorbing operation does not depend on friction, since the U-shaped portion of the energy absorbing member made of a belt-like flat plate or a wire rod is continuously deformed, so that a stable limit load can be obtained.
According to the invention of Claim 10, the activation of the first and second limit-load setting means can be switched reliably, since the operation control member is activated by relatively high power by the gas pressure from the gas generator. Also, when the limit load is set according to information that can be sensed in advance such as occupant information, the limit load can be set appropriately with relative low power, since the operation control member is operated with relatively low power by the electromagnetic force of the solenoid.

According to the invention of Claim 11, multiple load-limit operation patterns are set in which the magnitudes of the respective limit loads are set depending on emergency situation such as occupant's physique, seat-slide position, crash speed, crash acceleration or deceleration, and crash situation. Accordingly, the limit load can be set more easily depending on emergency situation such as occupant's physique, seat-slide position, crash speed, crash acceleration or deceleration, and crash situation.
According to the invention of Claim 12, the limit load of the seatbelt can be changed according to the information on emergency situation that can be acquired in advance.

Best mode for carrying out the present invention will be described with reference to the drawings.
Fig. 1 is a diagram of a seatbelt retractor according to an embodiment of the present invention, part of which is omitted.
Fig. 2 is a diagram for explaining the setting of a low-load mode of a PFL of the embodiment in Fig. 1.
Fig. 3 is a diagram for explaining the setting of a high-load mode of the PFL of the embodiment in Fig. 1.
Fig. 4 is a diagram showing the characteristic of the FL load of the embodiment of Fig. 1.
Fig. 5 is a block diagram of the setting of the seatbelt retractor 1 in Fig. 1 to high- and low-load modes.
Fig. 6 is a schematic diagram of a seatbelt retractor according to another embodiment of the present invention, wherein Fig. 6(a) is a partial sectional front view and Fig. 6(b) is a partial left side view of Fig. 6(a).
Fig. 7 is a diagram for explaining the power transmission of a gear power transmission mechanism, wherein Fig. 7(a) is an explanatory diagram of one power transmission system and Fig. 7(b) is an explanatory diagram of the other power transmission system.
Fig. 8 is a schematic diagram of an EA mechanism, an operation control member, and a drive member with a gas generator in non-operation, wherein Fig. 8(a) is a left side view thereof, Fig. 8(b) is a front view thereof, Fig. 8(c) is a right side view of the EA mechanism in an unoperated condition, and Fig. 8(d) is a right side view of the EA mechanism after EA operation is completed.
Fig. 9 is a diagram of an energy absorbing member, wherein Fig. 9(a) is a front view thereof, Fig. 9(b) is a plan view of one energy absorbing member, Fig. 9(c) is a plan view of the other energy absorbing member, and Fig. 9(d) is a plan view of a modification of the energy absorbing member.
Fig. 10 is a diagram of an energy-absorbing-member support member, wherein Fig. 10(a) is a side view thereof and Fig. 10(b) is a partially cut-away front view.
Fig. 11 is a schematic diagram of the operation control member and the drive member.
Fig. 12 is a schematic diagram of the EA mechanism, the operation control member, and the drive member with a gas generator in operation, wherein Fig. 12(a) is a left side view thereof, Fig. 12(b) is a front view thereof, and Fig. 12(c) is a right side view of the EA mechanism in non-operation.
Fig. 13 is a block diagram of the control of the PFL shown in Fig. 6(a).
Fig. 14 is a diagram of a first EA operation pattern.
Fig. 15 is a diagram of a second EA operation pattern.
Fig. 16 is a diagram of a third EA operation pattern.
Fig. 17 is a diagram of a fourth EA operation pattern.
Fig. 18(a) is a diagram showing an FL load when two EA mechanisms are operated, Fig. 18(b) is a diagram showing an FL load when one EA mechanism is operated, and Fig. 18(c) is a diagram showing an FL load when the other EA mechanism is operated.
Fig. 19 is a diagram of an PFL according to another embodiment, wherein Fig. 19(a) is a cross sectional view taken along line IXXA-IXXA of Fig. 19(b), with the gas generator in non-operation, Fig. 19(b) is a front view of the PFL with the gas generator in non-operation, Fig. 19(c) is a cross sectional view, taken along line IXXC-IXXC of Fig. 19(d), with the gas generator in operation, and Fig. 19(d) is a front view of the PFL with the gas generator in operation.
Fig. 20 is a schematic diagram of an operation control member and a drive member of the embodiment in Fig. 19, wherein Fig. 20(a) is a side view thereof and Fig. 20(b) is a cross sectional view taken along line XXB-XXB of Fig. 20 (a) .
Fig. 21 is a block diagram of the control of the PFL shown in Figs. 19(a) and 19(b).
Fig. 22 is a schematic partial sectional diagram of a seatbelt retractor according to yet another embodiment of the invention, as with Fig. 6(a).
Fig. 23 is a partial enlarged sectional view of a clutch mechanism of the embodiment in Fig. 22.
Fig. 24 is a partial enlarged sectional view of a spool-side gear and the clutch mechanism of the embodiment in Fig. 22.
Fig. 25 is a block diagram of the control of the PFL of the embodiment in Figs. 19(a) and 19(b).
Fig. 26 is a schematic partial diagram of a seatbelt retractor according to still another embodiment of the invention, showing a first EA operation pattern of the embodiment, as with Fig. 14.
Fig. 27 is a diagram of a second operation pattern of the embodiment of Fig. 26, as with Fig. 15.
Fig. 28 is a diagram showing the characteristics of the FL loads of this embodiment.
Fig. 29 is a diagram of an energy absorbing member according to another embodiment.
Fig. 30 is a diagram of an energy absorbing member and an energy-absorbing-member support member according to another embodiment.
Fig. 31 is a longitudinal sectional view of an example of a conventional seatbelt retractor including a torsion bar.
Fig. 32 is a schematic diagram of another example of the conventional seatbelt retractor including a torsion bar.
Fig. 33 is a diagram showing the characteristic of the FL load of the conventional example of Fig. 32.

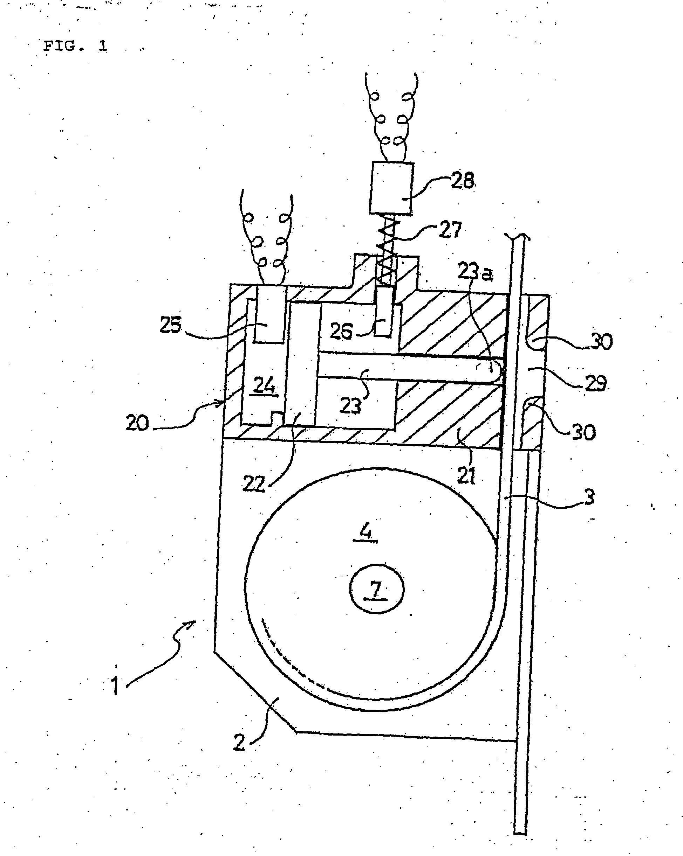

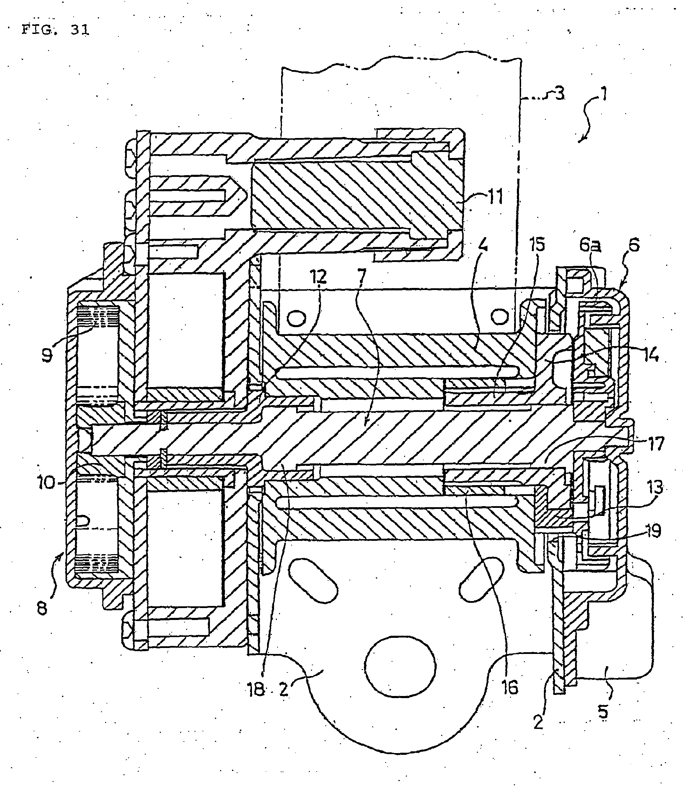

Fig. 1 is a diagram of a seatbelt retractor according to an embodiment of the present invention, part of which is omitted. In the description of the following embodiments, the same components as those of the previous embodiments and those of the conventional seatbelt retractor 1 shown in Fig. 31 are given the same numerals and their detailed description will be omitted.

As shown in Fig. 1, the seatbelt retractor 1 of this embodiment includes the U-shaped frame 2, the seatbelt 3, the spool 4 for retracting the seatbelt 3, and the torsion bar 7 (corresponding to a rotation transmission shaft and a first seatbelt-load limit mechanism) 7, as with the conventional seatbelt retractor 1 shown in Fig. 31.
Although not shown in detail, the seatbelt retractor 1 of this embodiment includes the deceleration detection means 5, the locking mechanism 6, and the spring means 8, as with the conventional seatbelt retractor 1 shown in Fig. 31, and a pretensioner similar to the pretensioner 11 and a bush similar to the bush 12 for transmitting the seatbelt retracting torque of the pretensioner 11 to the spool 4.

Furthermore, the seatbelt retractor 1 of this embodiment includes a programmable force limiter (hereinafter, also referred to as a PFL 20. The PFL 20 is disposed above the spool 4 and fixed to the frame 2.
The PFL 20 sets the limit load (FL load) of the seatbelt in a crash more flexibly and variously depending on information on emergency situation such as advance information (e.g., occupant's weight information, seat-slide position information), crash prediction information acquired from an impact prediction sensor, and crash severity information (e.g., crash speed information and crash situation information). Since the PFL 20 is disposed above the spool 4, the pretensioner 11, which is disposed above the spool 4 in Fig. 31, is disposed below the spool 4, although not shown, in the seatbelt retractor 1 of this embodiment.

The PFL 20 includes a body 21, a pressure piston 22 slidably provided in the body 21, a pressure rod 23 fixed to the pressure piston 22 in the body 21 such that it can slide with the pressure piston 22, a pressure chamber 24 provided in the body 21 and partitioned by the pressure piston 22, a gas generator (GG) 25 fixed to the body 21, generating gas in operation, and introducing the generated gas into the pressure chamber 24, a piston-movement limit member 26 provided to the body 21 such that it can move between a non-operation position (the position shown in Fig. 1) extending on the movement path of the pressure piston 22 to come into contact with the pressure piston 22 and an operation position retracting from the movement path not to come into contact with the pressure piston 22, a biasing spring 27 for normally biasing the piston-movement limit member 26 toward the non-operation position, a solenoid 28 for retracting the piston-movement limit member 26 into the operation position against the biasing force of the biasing spring 27, a T-shaped hole 29 provided in the body 21 for the seatbelt 3 to pass through movably and for the pressure rod 23 to enter, and a belt receiver 30 for receiving the seatbelt 3.

Since the pressure piston 22 and the pressure rod 23 move to the right, the end 23a of the pressure rod 23 comes into pressure contact with the seatbelt 3. When the seatbelt 3 is pushed, the seatbelt 3 is pressed between the end 23a of the pressure rod 23 and the belt receiver 30 (a detailed description thereof will be given later). Since the end 23a of the pressure rod 23 is shaped in a domical curve and the edge of the belt receiver 30 is in a round shape (R portion), the seatbelt 3 can be prevented from damage when pushed.
The seatbelt 3 is subjected to a limit load (PFL load) by the PFL 20 by the pressure to the seatbelt 3. Thus, the PFL 20 serves as limit-load setting means of the present invention.

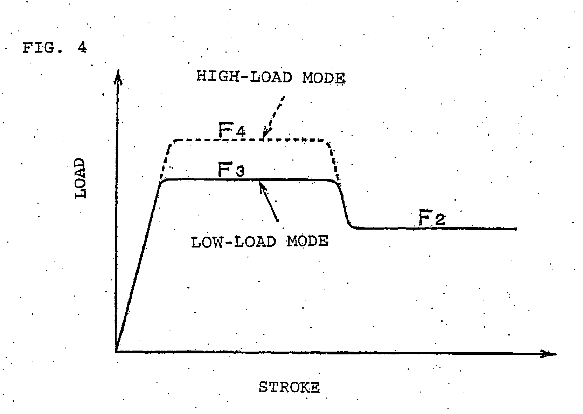

The seatbelt retractor 1 of this embodiment has three-stages of FL load mode, (1) a load mode by the non-operation of the PFL 20, (2) a low-load mode, and (3) a high-load mode.
(1) The load mode by the non-operation of the PFL 20 is a load mode due to the torsion of the torsion bar with the PFL 20 in non-operation. In short, EA operation only by the torsion of the torsion bar 7 is performed, in which case FL load F₂ is low, as shown in Fig. 4.

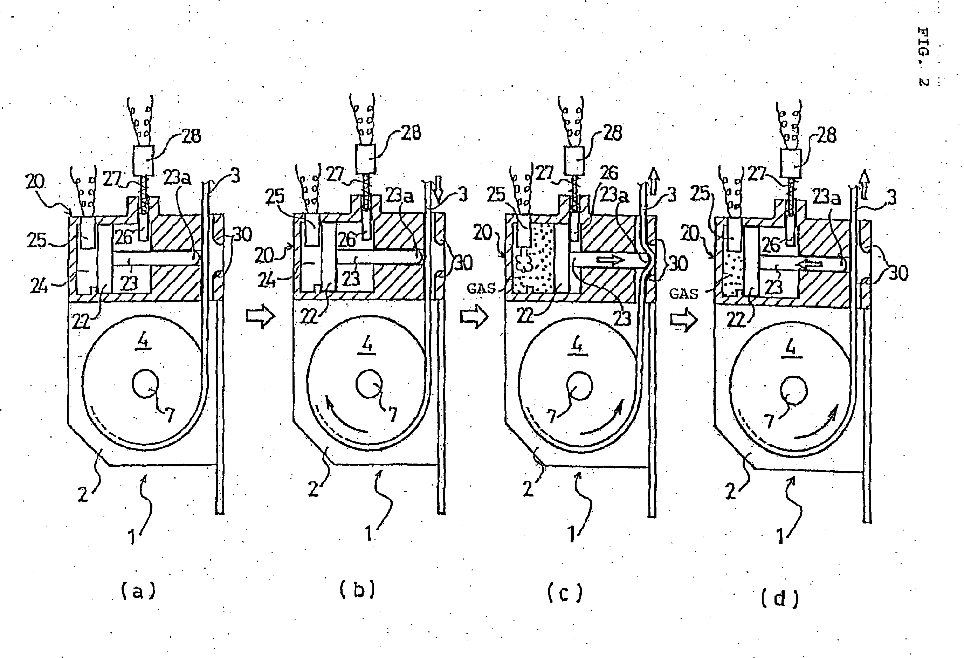

(2) The low-load mode is a load mode in which the piston-movement limit member 26 is set in the non-operation position shown in Fig. 1 to restrict the movement of the pressure piston 22, so that the movement of the pressure piston 22 is set relatively small. More specifically, the pretensioner 11 is activated by a crash, with the piston-movement limit member 26 set in a non-operation position as shown in Fig. 2(a), so that the spool 4 rotates in the belt retracting direction to retract the seatbelt 3, as shown in Fig. 2(b), and as such, the pretensioner 11 restrains the occupant, as with the conventional one.

Then, as shown in Fig. 2(c), after completion of the operation of the pretensioner 11, the seatbelt 3 is extracted by the inertial force of the occupant to twist the torsion bar 7, as with the conventional one, and the gas generator 25 is activated to generate gas. The generated gas is introduced into the pressure chamber 24. Then, the pressure piston 22 moves to the right by the pressure of the gas to come into contact with the piston-movement limit member 26 in the non-operation position, thereby restricting further rightward movement of the pressure piston 22 and the pressure rod 23. In other words, the rightward movement of the pressure piston 22 and the pressure rod 23 is restricted by the piston-movement limit member 26, so that the rightward movement of the pressure piston 22 and the pressure rod 23 is set relatively small. The seatbelt 3 is pushed between the end 23a of the pressure rod 23 and the belt receiver 30 by the rightward movement of the pressure rod 23. At that time, the pressure to the seatbelt 3 is relatively low, so that the friction between the pressure rod 23 and the belt receiver 30 is relatively small, because the rightward movement of the pressure rod 23 is set small and as such, the low-load mode is set in which the load on the seatbelt 3 is low. In the low-load mode, the PFL load is relatively low. Accordingly, the FL load F₃ of the seatbelt 3 in this case consists of the low PFL load and the load due to the torsion of the torsion bar 7, being relatively low, as indicated by the solid line in Fig. 4.

As shown in Fig. 2(d), the gas in the pressure chamber 24 is then discharged to push back the pressure piston 22 into the non-operation position by the seatbelt 3 which is given a belt tension. The gas can be discharged through small holes provided in the body 21. In that case, the small holes are set to a size that the gas is not discharged quickly when the gas generator 25 generates gas but discharged gradually at a predetermined time when the pressure piston 22 and the pressure rod 23 can move as described above and after the restriction of the load to the seatbelt. It is also possible to provide a solenoid valve so that the gas is discharged by opening it by a CPU 50 (described later) only at the time the gas is to be discharged.

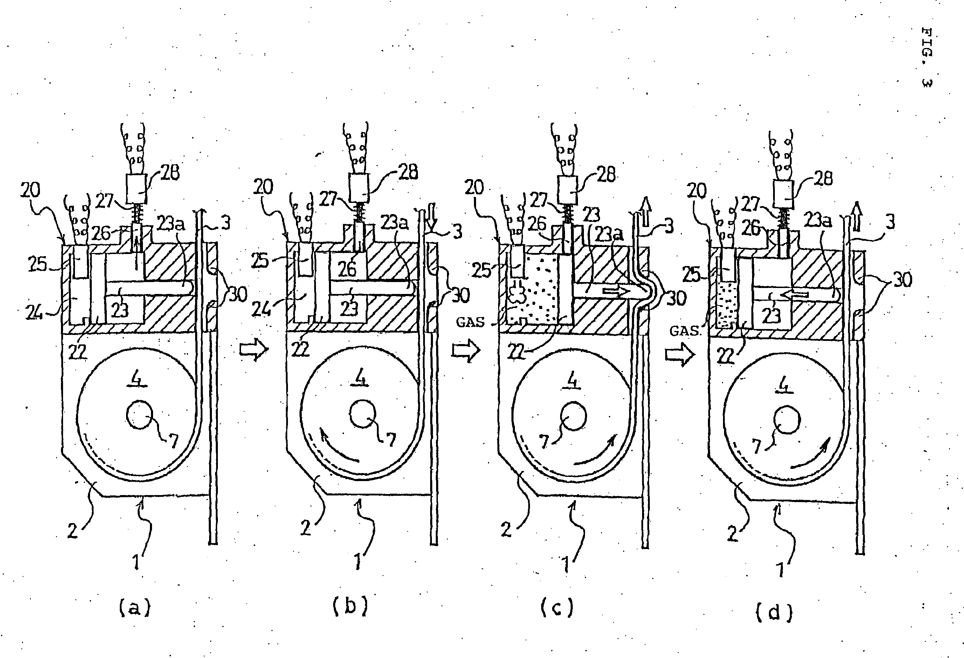

Thus, the operation of the PFL 20 is completed and the end 23a of the pressure rod 23 is separated from the seatbelt 3, thereby releasing the pressure to the seatbelt 3. Thereafter, as in the conventional one, the EA operation is performed by the twisting of only the torsion bar 7 and the load mode by the non-operation of the PFL 20, as noted above, is set. Accordingly, the FL load F₂ at that time is low, as shown in Fig. 4.
(3) The high-load mode is a load mode in which the piston-movement limit member 26 is set in the operation position, so that the movement of the pressure piston 22 is not restricted by the piston-movement limit member 26; thus the movement of the pressure piston 22 is set relatively large. More specifically, as shown in Fig. 3(a), the solenoid 28 is turned on to set the piston-movement limit member 26 in the operation position. When a crash occurs in that state, the pretensioner 11 is activated, as in the foregoing low-load mode, to retract the seatbelt 3 with the spool 4, as shown in Fig. 3(b), then the seatbelt 3 is extracted and the torsion bar 7 is twisted, as shown in Fig. 3(c), and the gas generated by the gas generator 25 is introduced into the pressure chamber 24. Then, the pressure piston 22 moves to the right, passing through the piston-movement limit member 26 in the operation position into contact with the body 21, thereby restricting the further rightward movement of the pressure piston 22 and the pressure rod 23. In other words, the rightward movement of the pressure piston 22 and the pressure rod 23 is not restricted by the piston-movement limit member 26, so that the rightward movement of the pressure piston 22 and the pressure rod 23 is set relatively large.

As in the low-load mode, the seatbelt 3 is pushed between the end 23a of the pressure rod 23 and the belt receiver 30 by the rightward movement of the pressure rod 23. At that time, the pressure to the seatbelt 3 is relatively high, so that the friction between the pressure rod 23 and the belt receiver 30 is relatively large, because the rightward movement of the pressure rod 23 is set large and as such, the high-load mode is set in which the load on the seatbelt 3 is high. In the high-load mode, the PFL load is relatively high. Accordingly, the FL load F₄ of the seatbelt 3 in this case consists of the high PFL load and the load due to the torsion of the torsion bar 7, being relatively high, as indicated by the dotted line in Fig. 4.

As shown in Fig. 3(d), the pressure piston 22 is then moved into the non-operation position and the operation of the PFL 20 is completed to release the pressure to the seatbelt 3, as in the low-lad mode. Thereafter, as in the above, the EA operation is performed by only the twisting of the torsion bar 7 and a load mode due to the non-operation of the PFL 20, as noted above, is set. Accordingly, the FL load F₂ at that time is low, as shown in Fig. 4.
As has been described, the PFL 20 of the seatbelt retractor in this embodiment is a frictional load PFL.

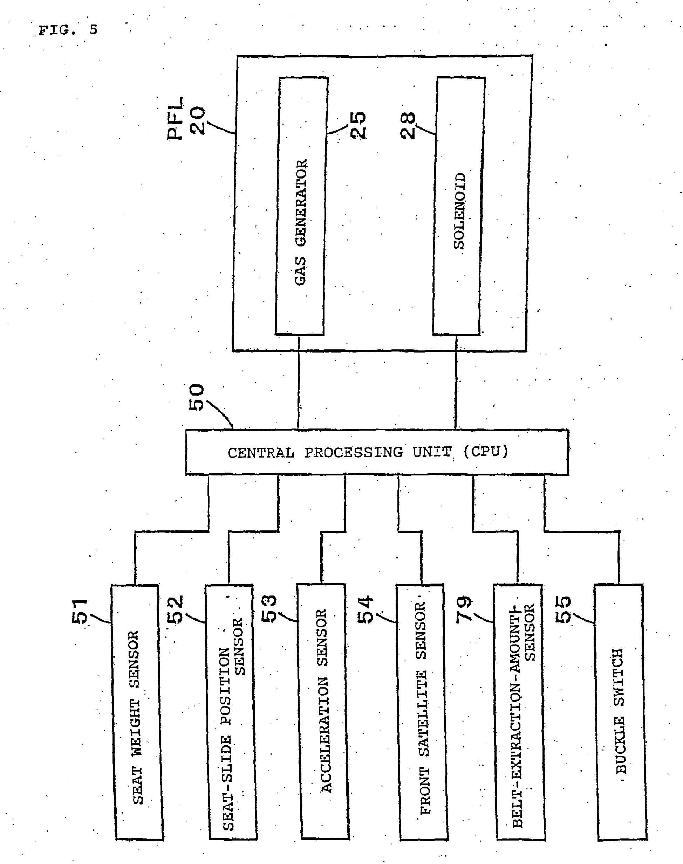

Fig. 5 is a block diagram of the setting of the seatbelt retractor 1 of this embodiment to the two high- and low load modes.
As shown in Fig. 5, a central processing unit (hereinafter, referred to as a CPU, corresponding to the limit-load control means of the present invention) 50 to set the high- and low-load modes. The CPU 50 stores conditions for operating the PFL 20 in advance. The CPU 50 sets any of the three-stage load modes, or the load mode by the non-operation of the PFL 20, the low-load mode, and the high-load mode, according to the information that is known before a crash (e.g., information on occupant's weight and seat slide position), thereby changing the FL load at a crash.

For this purpose, the CPU 50 connects to the gas generator 25 and the solenoid 28. The CPU 50 connects also to a seat weight sensor 51 for determining the load on a vehicle seat, or an occupant's weight, a seat-slide position sensor 52 for detecting the slide position of the vehicle seat, an acceleration sensor 53 for determining the acceleration and deceleration of a vehicle, a front satellite sensor 54 for sensing the situation of the left and right crash at the front of the vehicle, a buckle switch 55 which is turned on when a tongue is retained in a buckle, and a belt-extraction-amount sensor 79 for determining the extraction amount of the seatbelt 3 of the retractor 1.

The CPU 50 controls the on (operation) and off (non-operation) of the gas generator 25 and the solenoid 28 according to the conditions for operating the PFL 20 on the basis of the information which is given before a crash by the detection signals from the seat weight sensor 51, the seat-slide position sensor 52, the acceleration sensor 53, the front satellite sensor 54, and the belt-extraction-amount sensor 79. The operating conditions for the PFL 20 will be specifically described.
(a) PFL 20 Operating Condition Based on the Weight of Occupant Who Sits in Vehicle Seat
   The operating condition is for determining which of the three-stage load modes is set depending on the weight of an occupant who sits in the vehicle seat, as follows:
   (i) For small-sized occupants of light weight → setting to a load mode due to the non-operation of the PFL 20
   (ii) For ordinary occupants of medium weight → setting to a low-load mode
   (iii) For large-sized occupants of relatively heavy weight → setting to a high-load mode

The CPU 50 controls the on (operation) and off (non-operation) of the gas generator 25 and the solenoid 28 according to the information on occupant's weight by the detection signal from the seat weight sensor 51. The operating condition can be applied occupants who sit in any vehicle seat, particularly, preferable for occupants who sit in a passenger seat and a rear seat.
(b) PFL 20 Operating Condition Based on the Vehicle-Seat Fore-and-Aft Slide Position
   The operating condition is for determining which of the three-stage load modes is set depending on the vehicle-seat slide position, as follows:
   (i) For small-sized occupants of front seat position → setting to a load mode due to the non-operation of the PFL 20
   (ii) For middle-sized occupants of middle seat position → setting to a low-load mode
   (iii) For large-sized occupants of rear seat position → setting to a high-load mode

The CPU 50 controls the on (operation) and off (non-operation) of the gas generator 25 and the solenoid 28 according to the vehicle-seat slide-position information by the detection signal from the seat-slide position sensor 52. The operating condition can be applied occupants who sit in any vehicle seat, particularly, preferable for drivers who sit in a driver seat.

With the seatbelt retractor 1 of this embodiment, the permission or prohibition of the operation of the PFL 20 is determined by the on/off of the buckle switch 55. Specifically, the CPU 50 sets the PFL 20, from the on/off signal from the buckle switch 55, to allow operation when the tongue is brought into engagement with the buckle and to prohibit operation when the tongue is not in engagement with the buckle.

Furthermore, with the seatbelt retractor 1, the operation of the PFL 20 is varied depending on the severity of the crash. Specifically, the CPU 50 determines whether the occupant is small or large (including medium) from the detection signal from the seat weight sensor 51, the seat-slide position sensor 52, or the belt-extraction-amount sensor 79 and also determines whether the crash is of a low speed (e.g., approximately 20 to 30 km/h, not limited to that) or of a middle or high speed (e.g., approximately 30 km/h or more, not limited to that) from the detection signal from the acceleration sensor 53. For a small-sized occupant, the CPU 50 sets to a load mode by the non-operation of the PFL 20 for a low-speed crash and set to a low-load mode for a middle- or high-speed crash. For a large-sized occupant, the CPU 50 sets to a low-load mode for a low-speed crash and sets to a high-load mode for a middle- or high-speed crash.

Furthermore, with the seatbelt retractor 1 of this embodiment, the operation timing for the PFL 20 is varied depending on the severity of the crash. Specifically, the CPU 50 determines whether the crash is at a low speed (e.g., approximately 20 to 30 km/h, not limited to that), at a middle speed (e.g., 30 to 40 km/h, not limited to that), or at a high-speed (e.g., 40 km/h or more, not limited to that) from the detection signal from the acceleration sensor 53. For a low-speed crash, the CPU 50 delays the start of the operation of the PFL 20 (e.g., 35 ms after the crash, not limited to that); for a middle-speed crash, relatively delays the start of the operation of the PFL 20 (earlier than the low-speed crash, e.g., 25 ms after the crash, not limited to that); and for a high-speed crash, speeds up the start of the operation of the PFL 20 (e.g., 15 ms after the crash, not limited to that).

After the crash, the operation start timing for the PFL 20 can be varied depending on the vehicle crash severity. Also the operation start timing for the PFL 20 can be varied by the fixed delay time after the ignition of the pretensioner 11 with the operation timing of the pretensioner 11.

The seatbelt retractor 1 varies the operation of the PFL 20 according to the information on the crash speed, crash acceleration or deceleration, and crash severity, such as crash situation. Specifically, the CPU 50 determines whether the crash is a right-side offset crash or a left-side offset crash according to the detection signals from the acceleration sensor 53 and the front satellite sensor 54. For a right-side offset crash (a crash offset to the right of the vehicle), the CPU 50 accelerates the start of operation of the PFL 20 in the retractor of a right-hand seatbelt system mounted to the right-hand seat and delays the start of operation of the PFL 20 in the retractor of a left-hand seatbelt system mounted to the left-hand seat. Conversely, for a left-side offset crash (a crash offset to the left of the vehicle), the CPU 50 accelerates the start of operation of the PFL 20 in the retractor of a left-hand seatbelt system mounted to the left-hand seat and delays the start of operation of the PFL 20 in the retractor of a right-hand seatbelt system mounted to the right-hand seat.

The CPU 50 determines whether the crash is a right-side diagonal crash or a left-side diagonal crash according to the detection signals from the acceleration sensor 53 and the front satellite sensor 54, as in the above. For a right-side diagonal crash, the CPU 50 accelerates the start of operation of the right-hand PFL 20 and delays the start of operation of the left-hand PFL 20. Conversely, for a left-side diagonal crash, the CPU 50 accelerates the start of operation of the left-hand PFL 20 and delays the start of operation of the right-hand PFL 20.

Thus the PFL 20 and the CPU 50 constitute a second seatbelt load limit mechanism of the invention.
The other structures and operations of the seatbelt retractor 1 of this embodiment are the same as those of the conventional example of Fig. 31.
Although the block diagram of Fig. 5 shows no crash prediction sensor, it is also possible to provide the crash prediction sensor to change the limit load depending on not only advance occupant information and actual crash information but also crash prediction information from the crash prediction sensor.

The seatbelt retractor 1 of this embodiment includes the PFL 20 that changes the limit load (FL load) of a seatbelt in a crash depending on information on emergency situation such as advance information (e.g., occupant's weight information and seat-slide position information), crash prediction information acquired from the crash prediction sensor, and crash severity information after the crash (e.g., crash speed information, crash acceleration or deceleration information, and crash situation information). Accordingly, the FL load of the seatbelt 3 in a crash can be set more flexibly and variously depending on the situation of the crash. Thus the occupant can be protected more effectively and appropriately in a crash.

Since this embodiment uses the conventional simple torsion bar, the seatbelt-load limit mechanism can be constructed easily at low cost. Furthermore, since three-stage load modes are set, the limit load can easily be set according to emergency information (crash situation and the size of the occupant).

Although the load mode is set in three stages in the above-described embodiment, it is not limited to that but may be set in multiple stages of two or more.
Although the foregoing embodiment includes the pretensioner 11, it is not necessarily needed but may be omitted. However, it is preferable to provide the pretensioner 11 to protect the occupant in a crash more effectively.

Furthermore, while the foregoing embodiment uses the torsion bar 7 as the first seatbelt-load limit mechanism, the torsion bar 7 can be replaced with the EA mechanism disclosed in Patent Documents 2 to 6. The first seatbelt-load limit mechanism can be an EA mechanism applied for a patent by the present applicant in which a plate-like energy absorbing member provided on the locking base side is cut with a cutting projection provided on the spool side (JP-A-2004-249968).

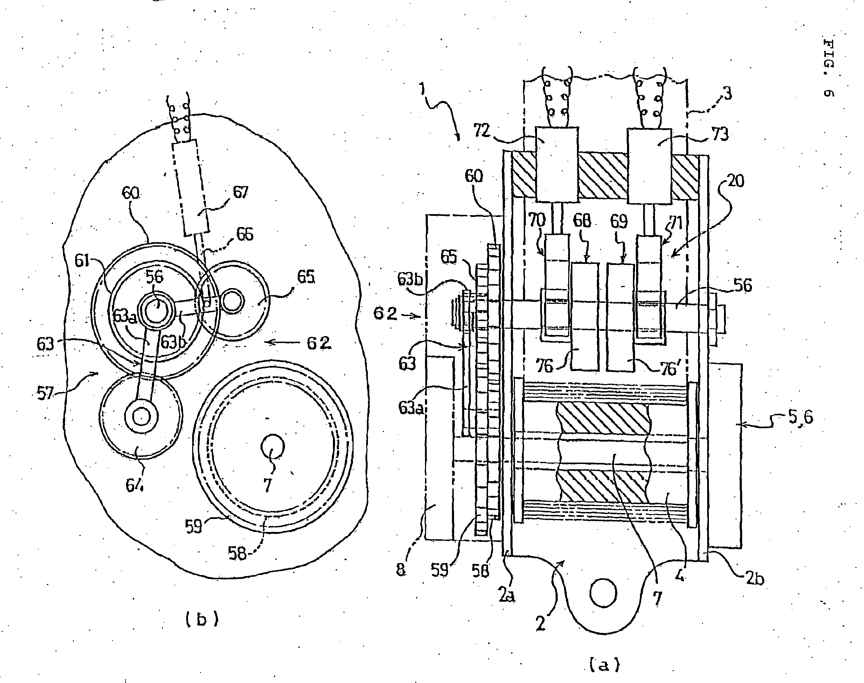

Fig. 6 is a schematic diagram of a seatbelt retractor according to another embodiment of the present invention, wherein Fig. 6(a) is a partial sectional front view and Fig. 6(b) is a partial left side view of Fig. 6(a). As shown in Figs. 6(a) and 6(b), the seatbelt retractor 1 of this embodiment also includes the PFL 20. The PFL 20 includes a rotation shaft 56 which is supported rotatably between both-side walls 2a and 2b of the U-shaped frame 2 such that it is in parallel with the spool 4 and the torsion bar 7.

The rotation shaft 56 can be rotatably connected to the torsion bar 7, which is coaxial with the spool 4, via a gear-power transmission mechanism 57. The gear-power transmission mechanism 57 includes a spool-side minor-diameter gear 58 mounted to the torsion bar 7 such that it can rotate therewith, a spool-side major-diameter gear 59 with a diameter larger than that of the spool-side minor-diameter gear 58, a PFL-side major-diameter gear 60 mounted to the rotation shaft 56 such that it can rotate therewith, a PFL-side minor-diameter gear 61 with a diameter smaller than that of the PFL-side major-diameter_gear 60, and a power-transmission switching means 62 for selectively switching the rotational connection between the spool-side minor-diameter gear 58 and the PFL-side major-diameter gear 60 and the rotational connection between the spool-side major-diameter gear 59 and the PFL-side minor-diameter gear 61.

The PFL-side major-diameter gear 60 is set smaller in diameter than the spool-side major-diameter gear 59. The power-transmission switching means 62 includes a pivot lever 63 supported thereto such that it can rotate therearound and bent in a chevron shape, a first intermediate gear 64 supported rotatably to the end of a lever portion 63a of the pivot lever 63, and a second intermediate gear 65 supported rotatably to the end of the other lever portion 63b of the pivot lever 63. The first intermediate gear 64 is normally in engagement with the PFL-side major-diameter gear 60; the second intermediate gear 65 is normally in engagement with the PFL-side minor-diameter gear 61. The first intermediate gear 64 can come into engagement with the spool-side minor-diameter gear 58, while the second intermediate gear 65 can come into engagement with the spool-side major-diameter gear 59.

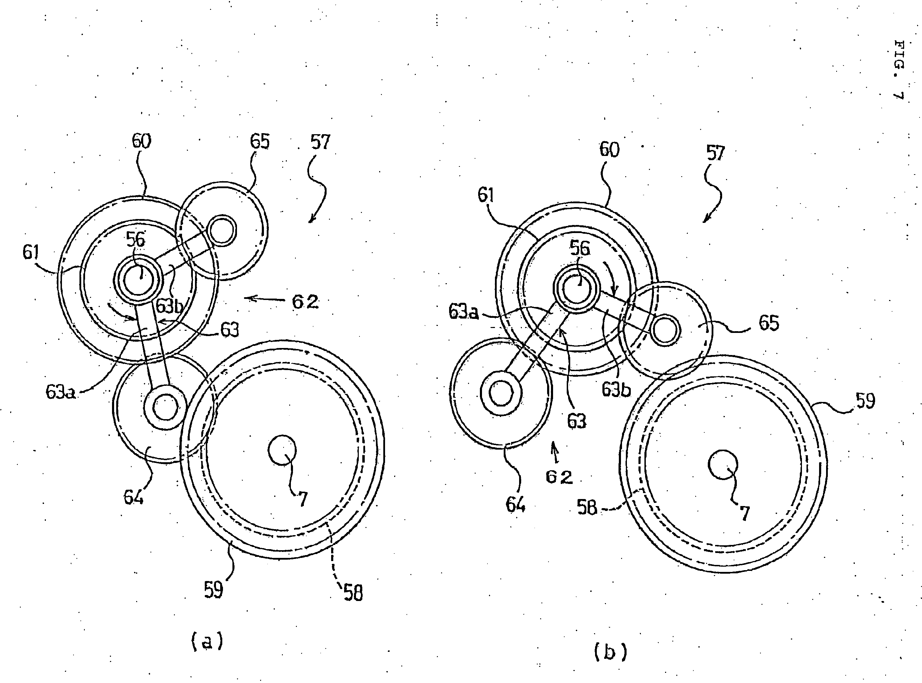

As shown by the alternate long and two short dashes line in Fig. 6(b), the lever portion 63b connects relatively rotatably to an operating rod 66 for turning the pivot lever 63. The operating rod 66 is operated in the extracting direction and the retracting direction by a solenoid 67.
When the PFL 20 is in non-operation, the first intermediate gear 64 is apart from the spool-side minor-diameter gear 58 and the second intermediate gear 65 is apart from the spool-side major-diameter gear 59, as shown in Fig. 6(b). When the operating rod 66 is moved in the retracting direction from the state of Fig. 6(b), the pivot lever 63 turns around the rotation shaft 56 counterclockwise to bring the first intermediate gear 64 into engagement with the spool-side minor-diameter gear 58, as shown in Fig. 7(a). Thus the torsion bar 7 is rotatably joined with the rotation shaft 56, so that the rotation of the torsion bar 7 is transmitted to the rotation shaft 56 via the spool-side minor-diameter gear 58, the first intermediate gear 64, and the PFL-side major-diameter gear 60. On the other hand, when the operating rod 66 is moved in the extracting direction from the state of Fig. 6(b), the pivot lever 63 turns around the rotation shaft 56 clockwise to bring the second intermediate gear 65 into engagement with the spool-side major-diameter gear 59, as shown in Fig. 7(b). Thus the torsion bar 7 is rotatably joined with the rotation shaft 56, so that the rotation of the torsion bar 7 is transmitted to the rotation shaft 56 via the spool-side major-diameter gear 59, the second intermediate gear 65, and the PFL-side minor-diameter gear 61. In that case, two different transmission-speed ratios are set in the respective power transmission systems of Fig. 7(a) and 7(b).

As shown in Fig. 6(a), the PFL 20 also includes two first and second EA mechanisms 68 and 69 provided to the rotation shaft 56, first and second operation control members 70 and 71 for controlling the EA operation of the first and second EA mechanisms 68 and 69, respectively, and first and second drive members 72 and 73 for driving the first and second operation control members 70 and 71, respectively. The first and second drive members 72 and 73 are both fixed to the frame 2. The first and second EA mechanisms 68 and 69 construct the first and second limit-load setting means of the invention.

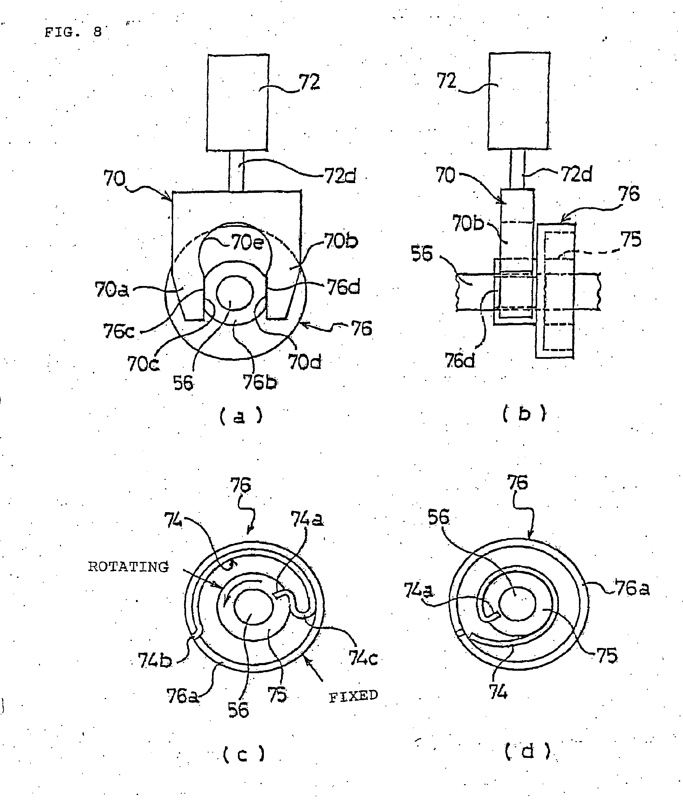

The first and second EA mechanisms 68 and 69 have the same structure. Thus the first EA mechanism 68 will be described hereinbelow. As shown in Figs. 8(a) to 8(d), the first EA mechanism 68 includes an energy absorbing member 74, an energy-absorbing-member support ring 75 fixed to the rotation shaft 56 such that it can rotate therewith, and an energy-absorbing-member support member 76 supported to the rotation shaft 56 such that it can rotate relatively therewith.

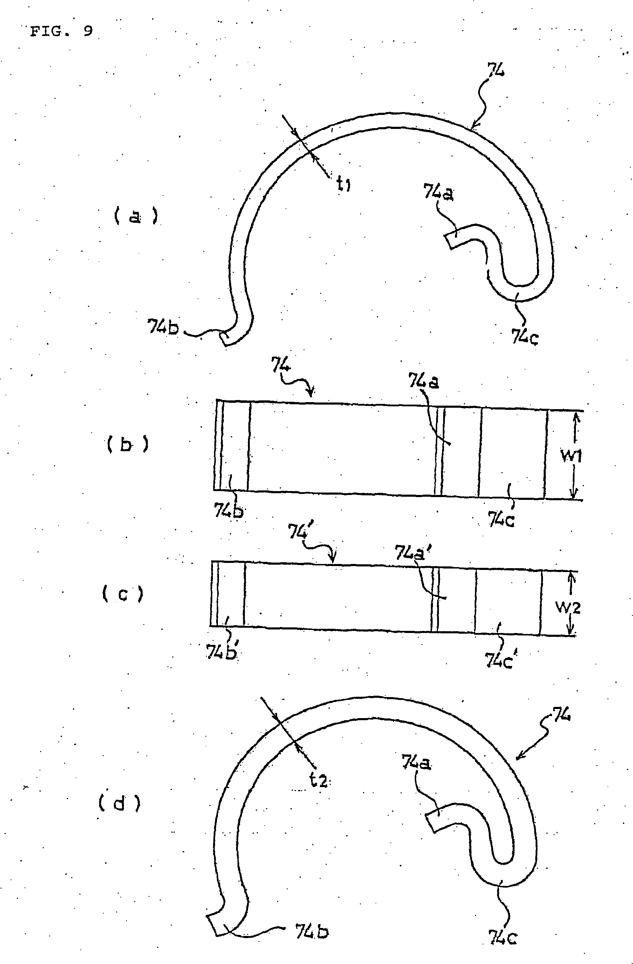

As shown in Figs. 9(a) and 9(b), the energy absorbing member 74 is made of a belt-like plate with a thickness t₁ and a width w₁ and is substantially in C-shape entirely.
One end of the energy absorbing member 74 serves as a first support portion 74a fixed to the energy-absorbing-member support ring 75, while the other end of the energy absorbing member 74 serves as a second support portion 74b slidably supported to the energy-absorbing-member support member 76. Near the first support portion 74a, a folded U-shaped portion 74c is provided.

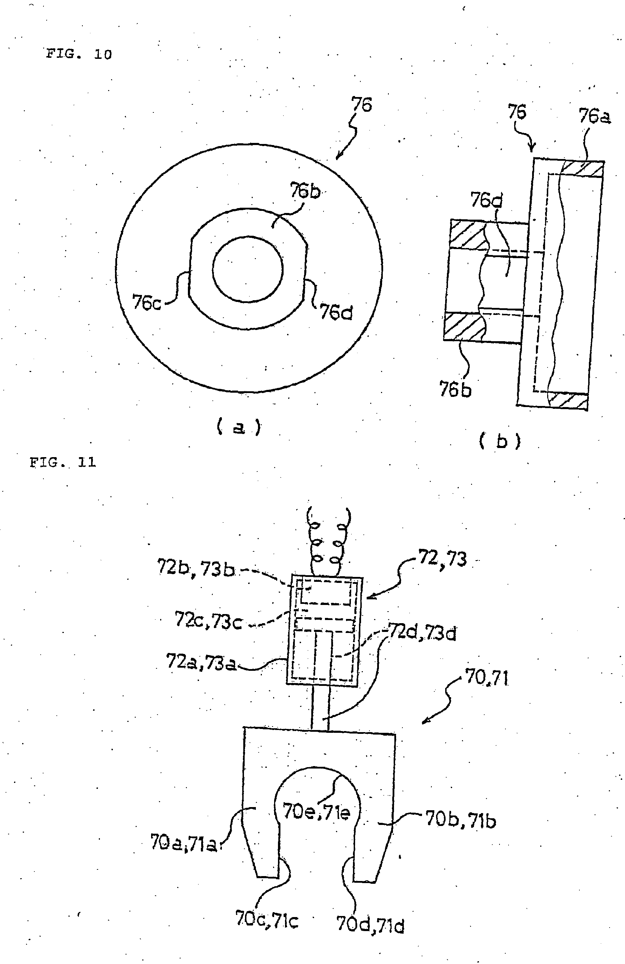

As shown in Figs. 10(a) and 10(b), the energy-absorbing-member support member 76 includes a closed-end cylinder 76a, which is disposed at one end and has the energy-absorbing-member support ring 75 therein, and a cylinder 76b, which is disposed at the other end and integrated with the closed-end cylinder 76a. A pair of flat surfaces 76c and 76d which are parallel with each other and have the same width are provided on the outer circumference of the cylinder 76b.

As shown in Figs. 8(b) and 8(c), the energy-absorbing-member support ring 75 is fixed to the rotation shaft 56 and the energy-absorbing-member support member 76 is relatively rotatably in engagement with the rotation shaft 56 from the left. The energy-absorbing-member support member 76 is positioned axially on the rotation shaft 56, with the energy-absorbing-member support ring 75 disposed in the closed-end cylinder 76a. The first support portion 74a of the energy absorbing member 74 is fixed to the energy-absorbing-member support ring 75, while the second support portion 74b of the energy absorbing member 74 slidably passes through the cylindrical portion of the closed-end cylinder 76a.

Also the second EA mechanism 69 has the same structure as the first EA mechanism 68, in other words, includes an energy absorbing member 74', an energy-absorbing-member support ring 75', and an energy-absorbing-member support member 76' supported relatively rotatably to the rotation shaft 56. (Numeral 74' is shown in Fig. 9(c) and numeral 76' is shown in Fig. 6(a). Numeral 75', which is not shown in any drawings, is used such that it corresponds to the energy-absorbing-member support ring 75 of the first EA mechanism 68 and given the mark "'" to the numeral 75. The components of the second EA mechanism 69 which are not shown in the drawings will be expressed as numerals of corresponding components of the first EA mechanism 68, which are given the mark " ' " for the convenience of description.)

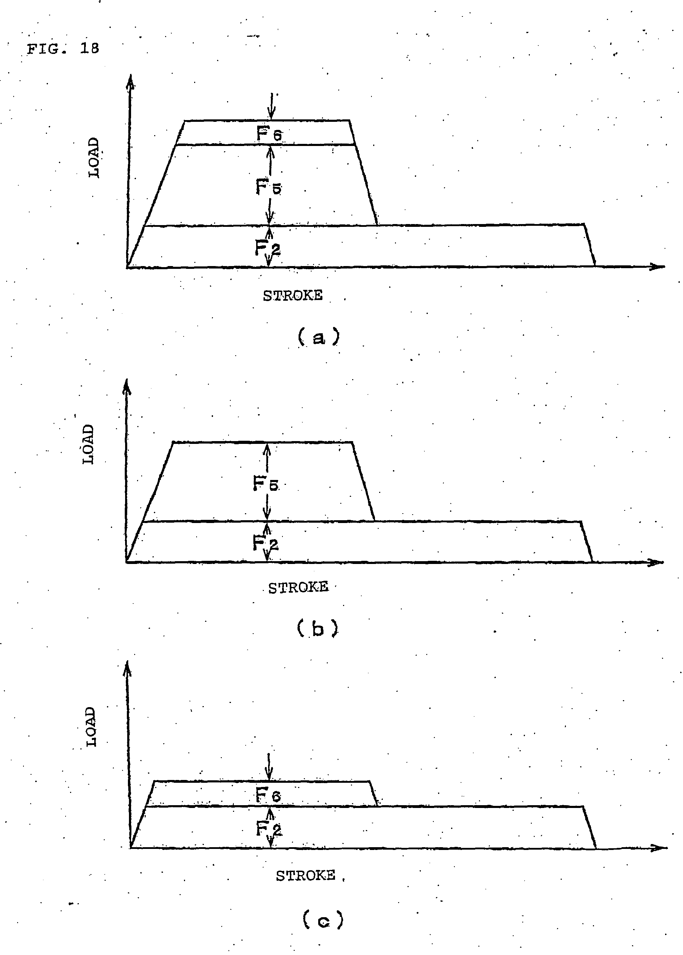

The energy absorbing member 74', the energy-absorbing-member support ring 75', and the energy-absorbing-member support member 76' are disposed on the rotation shaft 56 as in the first EA mechanism 68 such that they are symmetric to those of the first EA mechanism 68. As shown in Fig. 9(c), the thickness of the energy absorbing member 74' is set equal to the thickness t₁ of the energy absorbing member 74 of the first EA mechanism 68 but the width w₂ is set smaller than the width w₁ of the energy absorbing member 74 of the first EA mechanism 68 (w₂ < w₁). Accordingly, the energy absorption of the second EA mechanism 69 is lower than that of the first EA mechanism 68 and the load limit (FL load) of the second EA mechanism 69 is lower than that of the first EA mechanism 68. In short, as shown in Figs. 18(a) to 18(c), the FL load F₅ by the EA operation of the first EA mechanism 68 is relatively high, while the FL load F₆ by the EA operation of the second EA mechanism 69 is relatively low.

As shown in Fig. 9(d), to obtain different FL loads, the thickness t₂ of the energy absorbing members 74 and 74' can be different from the thickness t₁ (t₂ > t₁ holds in the embodiment of the drawing, however, the reverse is off course possible) or the width w can be continuously differentiated. The shape of the energy absorbing members 74 and 74' may be others. For the following description, the energy absorbing members 74 and 74' of Figs. 9(a) to 9(c) will be used.

The first and second operation control members 70 and 71 have the same structure, both of which will be described with reference to Fig. 11. As shown in Fig. 11, the first and second operation control members 70 and 71 are in U-shape including first and second arms 70a and 70b and 71a and 71b, respectively. The opposing surfaces at the respective ends (lower ends in the drawing) of the first and second arms 70a and 70b and 71a and 71b have a pair of rotation stop portions 70c and 70d and 71c and 71d, respectively, which are flat surfaces parallel to each other. The distance between the rotation stop portions 70c and 70d and 71c and 71d is set slightly larger than that between a pair of flat surfaces 76c and 76d and 76c' and 76d' of the cylinders 76b and 76b' in the energy-absorbing-member support members 76 and 76'. Arc-shaped rotation allowable portions 70e and 71e are provided above the rotation stop portions 70c and 70d and 71c and 71d of the first and second arms 70a and 70b and 71a and 71b such that they continue therefrom. The diameters of the rotation allowable portions 70e and 71e are set slightly larger than those of the outer circumferences (other than the flat surfaces 76c and 76d and 76c' and 76d') of the cylinders 76b and 76b'.

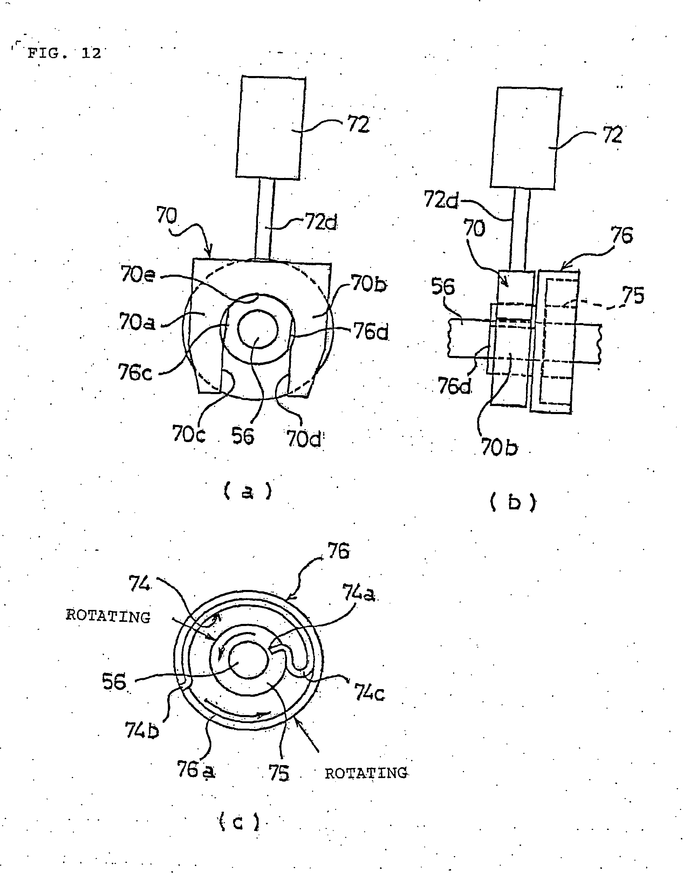

As shown in Figs. 8(a) and 8(b), in the first EA mechanism 68 and the first operation control member 70, for example, when the rotation stop portions 70c and 70d of the first and second arms 70a and 70b are in positions opposed to the flat surfaces 76c and 76d of the cylinder 76b (in the position where the rotation stop portions 70c and 70d clamp the flat surfaces 76c and 76d), the rotation of the energy-absorbing-member support member 76 is stopped by the rotation stop portions 70c and 70d. On the other hand, as shown in Figs. 11 and 12, to be described later, when the rotation allowable portion 70e of the first and second arms 70a and 70b is at the cylinder 76b, the rotation of the energy-absorbing-member support member 76 is allowed by the rotation allowable portion 70e.

As the rotation shaft 56 rotates counterclockwise, in Fig. 8(c), with the rotation of the energy-absorbing-member support member 76 stopped by the rotation stop portions 70c and 70d, as shown in Figs. 8(a) to 8(c), also the energy-absorbing-member support ring 75 rotates counterclockwise. Then the first support portion 74a of the energy absorbing member 74 also rotates counterclockwise and so the U-shaped portion 74c moves continuously toward the second support portion 74b at the terminal. In short, the energy absorbing member 74 is continuously deformed. The deformation of the energy absorbing member 74 absorbs the impact energy to allow the EA operation of the energy absorbing member 74. The EA operation of the energy absorbing member 74 limits the load applied to the seatbelt 3. Finally, as shown in Fig. 8(d), the U-shaped portion 74c disappears and the second support portion 74b is separated from the cylindrical portion of the closed-end cylinder 76a and as such, the EA operation of the energy absorbing member 74 is completed. Since the belt-like flat-plate energy absorbing member 74 is continuously deformed, the EA operation does not depend on friction, so that a stable FL load can be obtained.

As the rotation shaft 56 rotates counterclockwise, in Fig. 12(c), with the rotation of the energy-absorbing-member support member 76 allowed by the rotation allowable portion 70e, as shown in Figs. 12(a) to 12(c), also the energy-absorbing-member support ring 75 rotates counterclockwise. At that time, the rotation of the energy-absorbing-member support member 76 is allowed, also the energy-absorbing-member support member 76 rotates counterclockwise therewith via the energy absorbing member 74. Accordingly, the energy absorbing member 74 is not deformed to maintain the initial state, performing no EA operation, which absorbs no impact energy. Since the EA operation of the energy absorbing member 74 is not performed, the load applied to the seatbelt 3 is not limited by the energy absorbing member 74.
Also the second EA mechanism 69 and the second operation control member 71 operate as in the first EA mechanism 68 and the first operation control member 70, respectively.

The first and second drive members 72 and 73 have the same structure, which will be described with reference to Fig. 11. As shown in Fig. 11, the first and second drive members 72 and 73 include gas generators 72b and 73b disposed in cylinders 72a and 73a, pistons 72c and 73c also disposed in the cylinders 72a and 73a, and piston rods 72d and 73d for connecting the pistons 72c and 73c and the first and second operation control members 70 and 71, respectively.

The pistons 72c and 73c are moved downward in Fig. 11 by the gas generated from the gas generators 72b and 73b and as such, the piston rods 72d and 73d extend from the cylinders 72a and 73a to move the first and second operation control members 70 and 71 downward.

In that case, the first and second operation control members 70 and 71 are pushed downward by relatively large force by the gas pressure of the gas generators 72b and 73b even if friction occurs between the rotation stop portions 70c and 70d and 71c and 71d and the flat surfaces 76c and 76d and 76c' and 76d'. This ensures switching from rotation stop to rotation allowance.

Thus a brake mechanism for controlling the rotation of the energy-absorbing-member support members 76 and 76' is constructed by the rotation stop portions 70c and 70d and 71c and 71d and the rotation allowable portions 70e and 71e of the first and second arms 70a and 70b and 71a and 71b, the flat surfaces 76c and 76d and 76c' and 76d' of the cylinders 76b and 76b', and the first and second drive members 72 and 73.

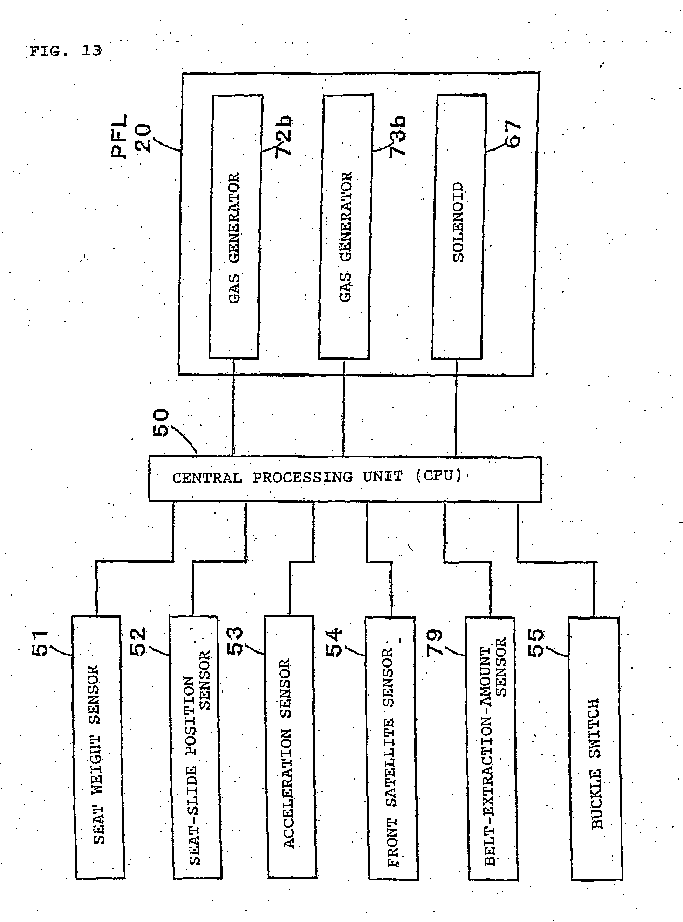

As shown in Fig. 13, the solenoid 67 and the gas generators 72b and 73b are controlled by the CPU 50 depending on the situation of emergency according to the output signals from the seat weight sensor 51, the seat-slide position sensor 52, the acceleration sensor 53, the front satellite sensor 54, the buckle switch 55, and the belt-extraction-amount sensor 79, as in the above.

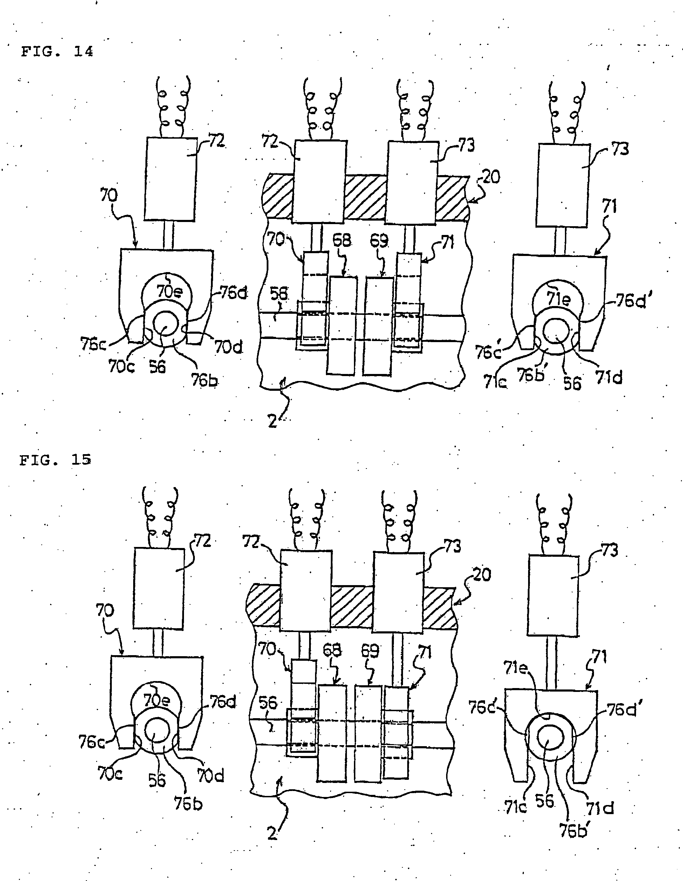

In the PFL 20 of this embodiment, four kinds of EA operation patterns are set by the operation or non-operation of the first and second EA mechanisms 68 and 69.
A first EA operation pattern is a pattern in which both of the first and second EA mechanisms 68 and 69 perform EA operation. In the first EA operation pattern, the rotation stop portions 70c and 70d and 71c and 71d of the first and second arms 70a and 70b and 71a and 71b are set in positions opposed to the flat surfaces 76c and 76d and 76c' and 76d' of the cylinders 76b and 76b', respectively, as shown in Fig. 14, to stop the rotation of the energy-absorbing-member support members 76 and 76' by the first and second operation control members 70 and 71, respectively. The FL load in the first EA operation pattern amounts to a total of the FL load F₂ of the torsion bar 7, the FL load F₅ of the first EA mechanism 68, and the FL load F₆ of the second EA mechanism 69, as shown in Fig. 18(a). The first EA operation pattern is set for normal times, e.g., for occupants with a weight heavier than average.

A second EA operation pattern is a pattern in which the first EA mechanism 68 performs EA operation, while the second EA mechanism 69 performs no EA operation. In the second EA operation pattern, the rotation stop portions 70c and 70d of the first arms 70a and 70b are set in positions opposed to the flat surfaces 76c and 76d of the cylinder 76b, respectively, while the rotation allowable portion 71e of the second operation control member 71 is set in a position opposed to the cylinder 76b', as shown in Fig. 15, to stop only the rotation of the energy-absorbing-member support member 76 by the first operation control member 70, and to allow the rotation of the energy-absorbing-member support member 76'. The FL load in the second EA operation pattern amounts to a total of the FL load F₂ of the torsion bar 7 and the FL load F₅ of the first EA mechanism 68, as shown in Fig. 18(b). The second EA operation pattern is set, e.g., for occupants of an average weight.

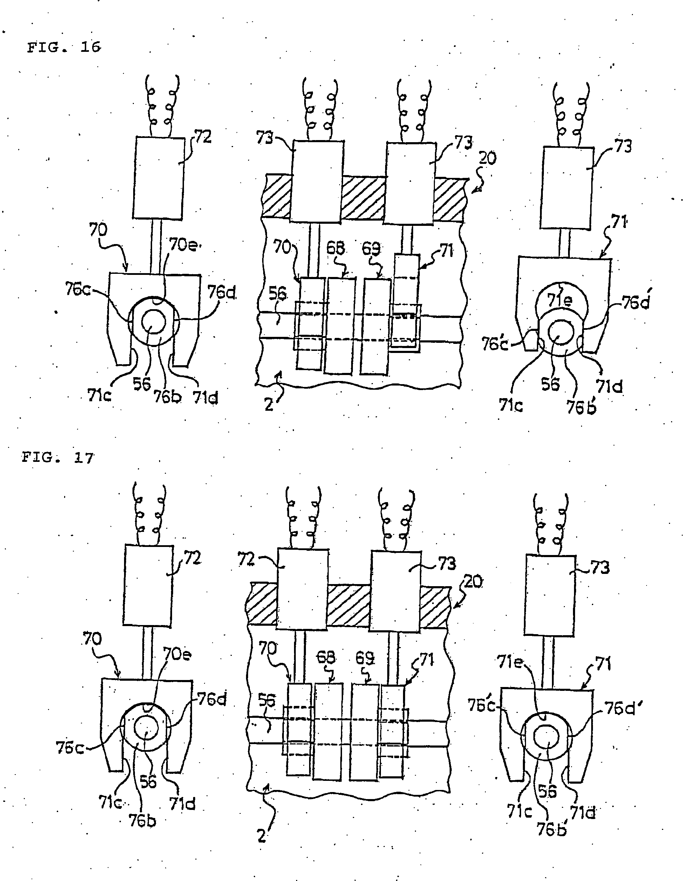

A third EA operation pattern is a pattern in which the second EA mechanism 69 performs EA operation, while the first EA mechanism 68 performs no EA operation. In the third EA operation pattern, the rotation stop portions 71c and 71d of the second arms 71a and 71b are set in positions opposed to the flat surfaces 76c' and 76d' of the cylinder 76b', respectively, while the rotation allowable portion 71e of the first operation control member 70 is set in a position opposed to the cylinder 76b, as shown in Fig. 16, to stop only the rotation of the energy-absorbing-member support member 76' by the second operation control member 71, and to allow the rotation of the energy-absorbing-member support member 76. The FL load in the third EA operation pattern amounts to a total of the FL load F₂ of the torsion bar 7 and the FL load F₆ of the second EA mechanism 69, as shown in Fig. 18(c). The third EA operation pattern is set, e.g., for occupants with a weight lighter than average weight.

A fourth EA operation pattern is a pattern in which neither of the first and second EA mechanisms 68 and 69 performs EA operation. In the fourth EA operation pattern, the rotation stop portions 71c and 71d of the second arms 71a and 71b are set in positions opposed to the flat surfaces 76c' and 76d' of the cylinder 76b', respectively, as shown in Fig. 17, while the rotation allowable portions 70e and 71e of the first and second operation control members 70 and 71 are set in positions opposed to the cylinders 76b and 76b' to allow the rotation of the energy-absorbing-member support members 76 and 76', respectively. The FL load in the fourth EA operation pattern amounts to only the FL load F₂ of the torsion bar 7, which is not shown.

The block diagram of Fig. 13 shows no crash prediction sensor, as in the embodiment of Fig. 5. However, the crash prediction sensor may be provided to change the limit load according to not only advance occupant information and actual crash information but also crash prediction information acquired from the crash prediction sensor.

The foregoing EA operation patterns are set depending on occupant's weight, or advance information. However, the setting of the EA operation patterns can depend on information on emergency situation such as advance information such as occupant's physique including the height, seat-slide position, crash prediction information acquired from a crash prediction sensor, and crash severity information after the crash (e.g., crash speed information, crash acceleration or deceleration information, and crash situation information).
Thus, the respective limit loads in the EA operation patterns are set depending on the situation of the emergency. Thus the limit load can be set more easily depending on the situation of the emergency.

In the first EA operation pattern, any of the first and second EA mechanisms 68 and 69 perform EA operation during the same period, however, either of the first and second EA mechanisms 68 and 69 can complete the EA operation earlier by staggering the operation timing of the gas generators 72b and 73b. Accordingly, an FA load by the EA operation of the torsion bar 7 and an FA load in which FL loads by the EA operation of the first and second EA mechanisms 68 and 69 are superposed can be obtained first, and then an FL load except the FL load by the EA operation of the EA mechanism that completed the EA operation can be obtained.

The operation of the seatbelt retractor 1 of this embodiment will now be described.
The gas generators 72b and 73b do not normally operate and the PFL 20 is set to the fourth EA operation pattern shown in Fig. 14. The gear-power transmission mechanism 57 is set in the state in which the torsion bar 7 and the rotation shaft 56 are not connected to each other, shown in Fig. 6(b). Accordingly, the seatbelt 3 can be extracted freely and lightly, as with the general conventional seatbelt retractor, and can be retracted with the spring means 8. Thus the occupant can easily perform the fastening operation and releasing operation of the seatbelt 3.

In an emergency such as a car crash, the CPU 50 determines the occurrence of emergency according to the output signals from the seat weight sensor 51, the seat-slide position sensor 52, the acceleration sensor 53, the front satellite sensor 54, the buckle switch 55, and the belt-extraction-amount sensor 79, and activates the solenoid 67 depending on the situation of emergency to set the gear-power transmission mechanism 57 in either of the power transmission patters shown in Figs. 7(a) and 7(b). Accordingly, the torsion bar 7 and the rotation shaft 56 are connected to each other via the gear-power transmission mechanism 57 to transmit the rotation of the torsion bar 7 to the rotation shaft 56 at the speed ratio of the set power transmission pattern.

At the same time, the CPU 50 controls the operation of the gas generators 72b and 73b depending on the situation of emergency. In other words, when the CPU 50 has determined that a relatively high FL load is required for, e.g., relatively high-weight occupants, it does not operate the gas generators 72b and 73b and sets the first and second EA mechanisms 68 and 69 in the EA operation allowable mode, shown in Fig. 14, and maintains the PFL 20 in the initial state. Thus a high FL load (F₂ + F₅ + F₆) is obtained. When the CPU 50 determines that the relatively high FL load becomes unnecessary from the detection signals from the foregoing sensors, e.g., crash severity and occupant's physique during energy absorption by the energy absorbing members 74 and 74' of the first and second EA mechanisms 68 and 69, that is, in the stroke of the spool 4, the CPU 50 operates the gas generators 72b and 73b to set the first and second EA mechanisms 68 and 69 into the EA-operation disable mode (the fourth EA operation pattern) shown in Fig. 17. Thus, the FL loads F₅ and F₆ cannot be obtained and only the FL load F₂ by the torsion bar 7 is obtained. The FL load for the stroke of the spool 4 in that case is the load shown in Fig. 18(a). Of course, it is needless to say that only the FL load F₂ by the torsion bar 7 is obtained also after the EA operation of the energy absorbing member 74 and 74' has been finished, as shown in Fig. 8(d).

When the CPU 50 has determined that normal (middle) FL load is required for, e.g., average-weight occupants, it operates only the gas generator 73b to set only the first EA mechanism 68 to the EA operation allowable mode, shown in Fig. 15. Thus a normal FL load (F₂ + F₅) is obtained. When the CPU 50 has determined that the normal FL load becomes unnecessary during energy absorption by the energy absorbing member 74 of the first EA mechanism 68, as in the above, the CPU 50 activates the gas generator 72b to set the first EA mechanism 68 into the EA-operation disable mode (the fourth EA operation pattern) shown in Fig. 17. Thus, the FL load F₅ cannot be obtained and only the FL load F₂ by the torsion bar 7 is obtained. The FL load for the stroke of the spool 4 in that case is the load shown in Fig. 18(b).

When the CPU 50 has determined that a relatively low FL load is required for, e.g., relatively low-weight occupants, it operates only the gas generator 72b to set only the second EA mechanism 69 in the EA operation allowable mode, shown in Fig. 16. Thus a normal FL load (F₂ + F₆) is obtained. When the CPU 50 has determined that the relatively low FL load becomes unnecessary during energy absorption by the energy absorbing member 74' of the second EA mechanism 69, the CPU 50 operates the gas generator 73b to set the second EA mechanism 69 into the EA-operation disable mode (the fourth EA operation pattern) shown in Fig. 17. Thus, the FL load F₆ cannot be obtained and only the FL load F₂ by the torsion bar 7 is obtained. The FL load for the stroke of the spool 4 in that case is the load shown in Fig. 18 (c) .

The seatbelt retractor 1 of this embodiment provides an appropriate limit load depending on the situation of emergency with the simple structure of the two first and second EA mechanisms 68 and 69. Also, two power transmission systems with different speed ratios are set for the rotation of the torsion bar 7 in the gear-power transmission mechanism 57. Accordingly, an appropriate limit load can be obtained depending on the situation of emergency with the power transmission of different speed ratios. Only one power transmission system may also be set.
The other structures and advantages of the seatbelt retractor 1 are the same as those of the foregoing conventional examples and the above-described embodiments of the invention.

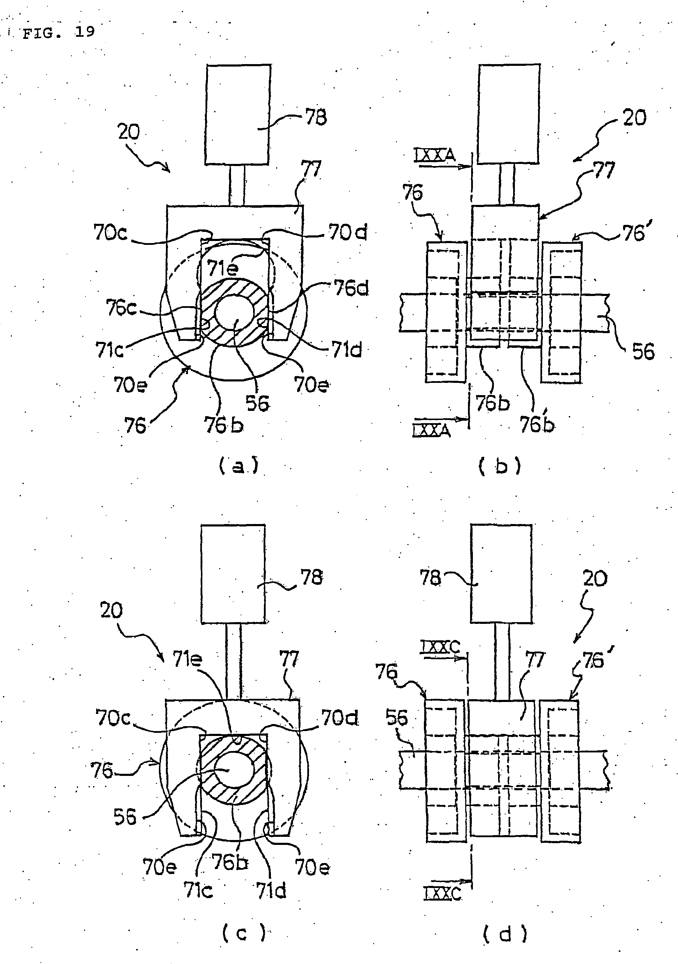

Figs. 19(a) to 19(d) are schematic diagrams of a seatbelt retractor according to another embodiment of the invention, wherein Figs. 19(a) and 19(c) are cross sectional views taken along line IXXA-IXXA of Fig. 19(b) and taken along line IXXC-IXXC of Fig. 19(d), respectively.

As shown in Figs. 19(a) to 19(d), in the PFL 20 of this embodiment, the two first and second EA mechanisms 68 and 69 are disposed on the rotation shaft 56 such that they are opposite to the embodiment of Fig. 6(a). An operation control member 77 is disposed to control both of the EA operation of the first and second EA mechanisms 68 and 69. Accordingly, the operation control member of this embodiment is decreased by one as compared with the embodiment of Fig. 6 (a) .

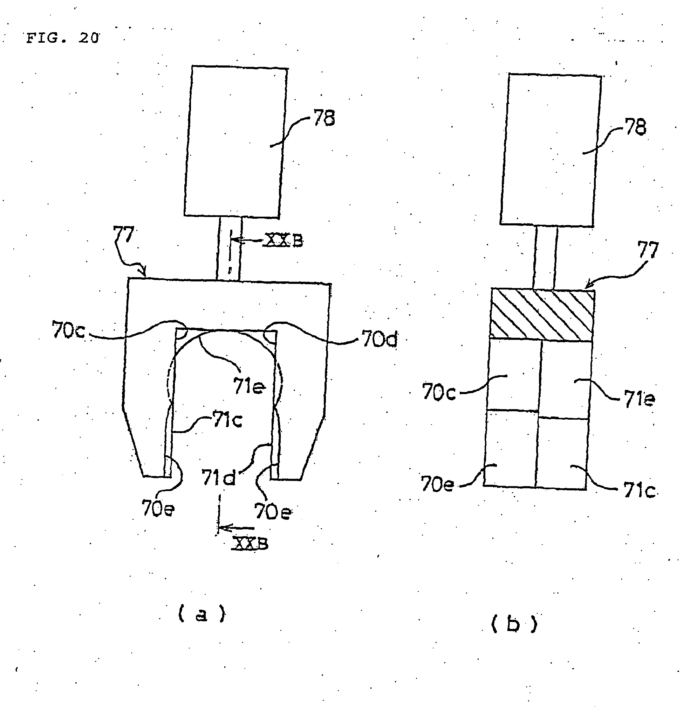

As shown in Figs. 20(a) and 20(b), the operation control member 77 includes the rotation stop portions 70c and 70d and the rotation allowable portion 70e for the cylinder 76b of the energy-absorbing-member support member 76, at one end of the first and second arm portions 77a and 77b, and includes the rotation stop portions 71c and 71d and the rotation allowable portion 71e for the cylinder 76b' of the energy-absorbing-member support member 76', at the other end of the first and second arm portions 77a and 77b. In that case, the rotation stop portions 71c and 71d and the rotation allowable portion 71e are disposed in the same position as the above embodiment, while the rotation stop portions 70c and 70d and the rotation allowable portion 70e are disposed in the position vertically opposite to the above embodiment.

Specifically speaking, when the rotation of the energy-absorbing-member support member 76 is allowed by the ' rotation allowable portion 70e, as shown in Figs. 19(a) and 19(b), the rotation of the other energy-absorbing-member support member 76' is stopped by the rotation stop portions 71c and 71d. On the other hand, when the rotation of the energy-absorbing-member support member 76 is stopped by the rotation stop portions 70c and 70d, as shown in Figs. 19(c) and 19(d), the rotation of the other energy-absorbing-member support member 76' is allowed by the rotation allowable portion 71e.

Since only one operation control member 77 is provided, the drive member is also provided as a single drive member 78 common to the first and second EA mechanisms 68 and 69. Accordingly, in this embodiment, also the drive member is decreased by one as compared with the embodiment of Fig. 6(a). The structure of the drive member 78 is the same as that of the first and second drive members 72 and 73 shown in Fig. 11, having the gas generator, the piston, and the piston rod.
The other structures of the seatbelt retractor 1 of this embodiment are the same as those of the embodiment of Fig. 6(a).

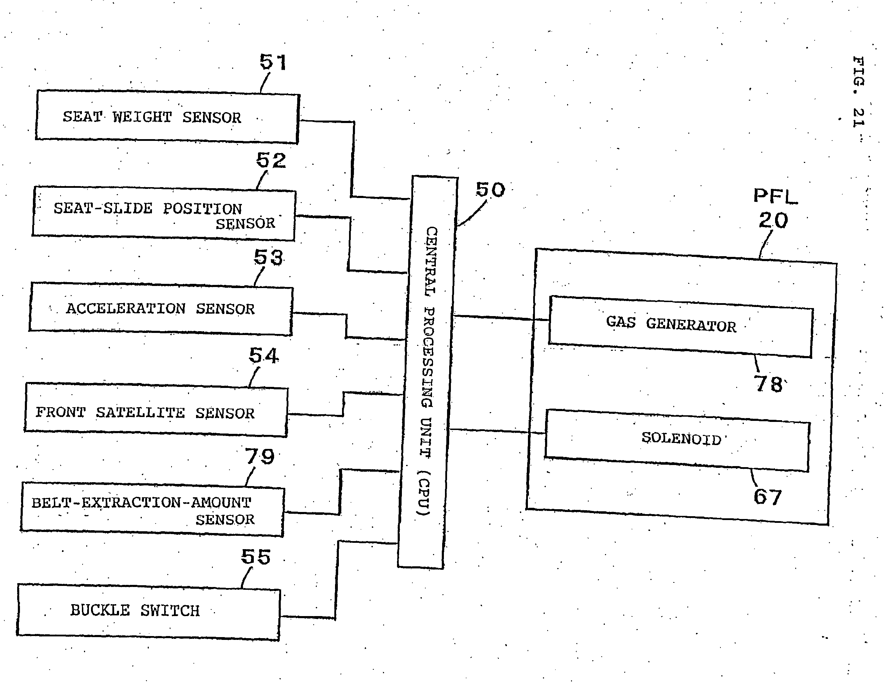

As shown in Fig. 21, in the PFL 20 of this embodiment, the operation of the solenoid 67 and the gas generator of the drive member 78 are controlled by the CPU 50 depending on the situation of emergency according to the output signals from the seat weight sensor 51, the seat-slide position sensor 52, the acceleration sensor 53, the front satellite sensor 54, the buckle switch 55, and the belt-extraction-amount sensor 79, as above.

The EA operation pattern of the PFL 20 of this embodiment includes two EA operation patterns similar to the second and third EA operation patterns shown in Figs. 15 and 16 in the embodiment of Fig. 6(a). More specifically, when the gas generator does not operate, only the rotation of the energy-absorbing-member support member 76', shown in Figs. 19(a) and 19(b), is set to be stoppable. Accordingly, only the EA operation of the second EA mechanism 69 is allowed at that time and so, the FL load at the time when only the second EA mechanism 69 performs the EA operation becomes the level shown in Fig. 18(c), as above. On the other hand, when the gas generator operates, only the rotation of the energy-absorbing-member support member 76, shown in Figs. 19(c) and 19(d), is set to be stoppable. Accordingly, only the EA operation of the first EA mechanism 68 is allowed. The FL load at the time when only the first EA mechanism 68 performs the EA operation becomes the level shown in Fig. 18 (b), as above.

Thus, in the PFL 20 of this embodiment, only two EA operation patterns can be set by the operation of the drive member 78. However, the PFL 20 can be simple in structure and reduced in cost, as compared with the embodiment of Fig. 6(a), because only one operation control member 77 and one drive member 78 including the gas generator are provided.
The other advantages of the seatbelt retractor 1 of this embodiment are the same as those of the embodiment in Fig. 6(a).

In this embodiment, when the operation control member 77 is operated using, of emergency information, occupant information (information from the seat weight sensor 51 and the seat-slide position sensor 52) acquired in advance, the solenoid, which can be operated at a relatively low load, can be used in place of the gas generator 78. Thus, the limit load of the seatbelt can be changed depending on advance emergency information.
Although the block diagram of Fig. 21 shows no crash prediction sensor, the crash prediction sensor may be provided, as in the above, to change the limit load according to not only advance occupant information and actual crash information but also the crash prediction information acquired from the crash prediction sensor.

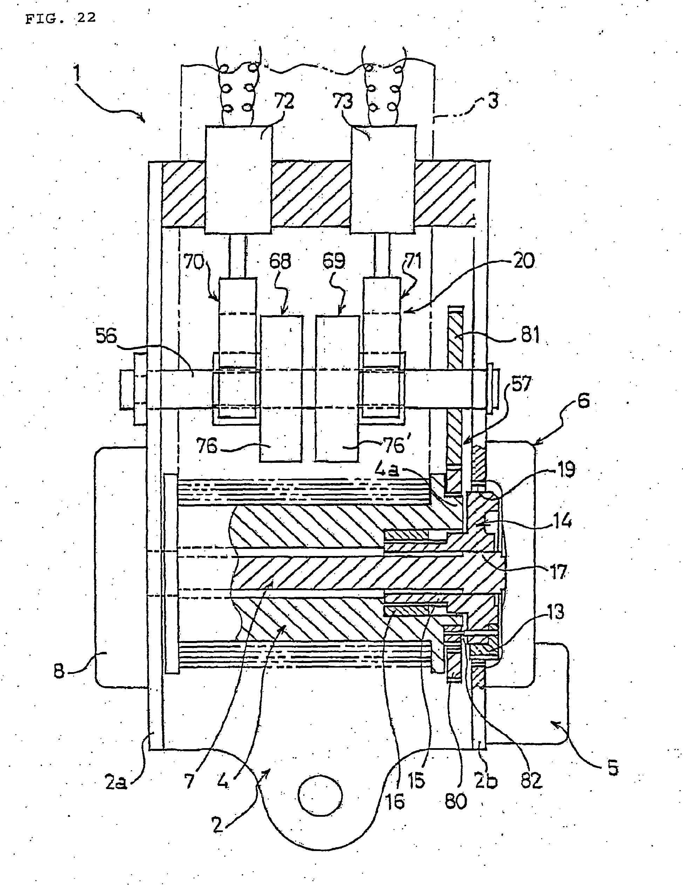

Fig. 22 is a schematic partial sectional diagram of a seatbelt retractor according to yet another embodiment of the present invention, as with Fig. 6(a).
In the embodiment of Figs. 6(a) and 6(b), the spool-side minor- and major-diameter gears 58 and 59, which are mounted to the torsion bar 7 such that they rotate therewith, and the PFL-side major- and minor-diameter gears 60 and 61, which are mounted to the rotation shaft 56 of the PFL 20 such that they rotate therewith, are normally out of engagement but, in an emergency, corresponding gears are selectively brought into engagement by the power-transmission switching means 62. However, as shown in Fig. 22, the seatbelt retractor 1 of this embodiment does not include the spool-side minor- and major-diameter gears 58 and 59, the PFL-side major- and minor-diameter gears 60 and 61, the power-transmission switching means 62, and the solenoid 67.

As shown in Fig. 22, the seatbelt retractor 1 includes, as the gear-power transmission mechanism 57, a spool-side gear 80 that is provided rotatably and coaxially relative to the spool 4 of the conventional seatbelt retractor 1 shown in Fig. 31, a PFL-side gear 81 that is provided rotatably and coaxially relative to the rotation shaft 56, and a clutch mechanism 82 that rotatably connects the spool 4 and the spool-side gear 80 in an emergency.

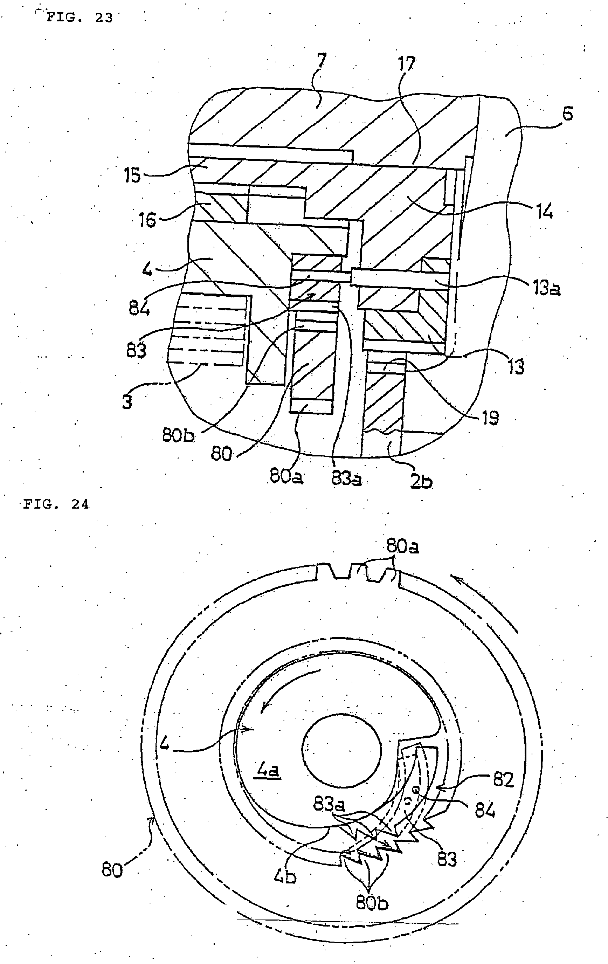

As detailed in Figs. 23 and 24, the spool-side gear 80 is shaped like a ring including an external gear 80a and an internal gear 80b. The internal gear 80b is shaped in a ratchet gear engageable in the belt extracting direction. The spool-side gear 80 is supported rotatably relative to the spool 4 such that the internal gear 80b is in contact with a support shaft 4a projecting from the end face of the spool 4 adjacent to the locking base 14.

The clutch mechanism 82 includes an arc-shaped clutch pawl 83 having a predetermined number of engage claws 83a at one end, which can come into engagement with the internal gear 80b of the spool-side gear 80. The clutch pawl 83 is supported slidably to a support surface 4b of the support shaft 4a, the support surface 4b being curved in a prescribed shape. The clutch pawl 83 can rotate with a shear pin 84 which is provided integrally and coaxially to the rotation shaft 13a of the pawl 13 of the locking mechanism 6. When the pawl 13 rotates in an emergency to stop the rotation of the locking base 14 in the belt extracting direction, the engage claws 83a of the clutch pawl 83 rotate with the pawl 13 to be brought into engagement with the internal gear 80b. Accordingly, the rotation shaft 13a serves as the interlocking member of the invention which links with the operation of the locking mechanism 6 in an emergency.

When the pawl 13 rotates in an emergency when the deceleration detection means 5 is activated, to come into engagement with the internal gear 19 on the side wall 2b of the frame 2, the clutch pawl 83 rotates with the pawl 13, so that the engage claws 83a come into engagement with the internal gear 80b of the spool-side gear 80, as indicated by the alternate and long and two short dashes line in Fig. 24, to connect the clutch mechanism 82. By the connection of the clutch mechanism 82, the spool 4 and the spool-side gear 80 are rotatably connected at least in the belt extracting direction. When the pawl 13 comes into engagement with the internal gear 19 of the frame 2, the rotation of the locking base 14 in the belt extracting direction is locked, while the seatbelt 3 is extracted by the inertial force of the occupant to further rotate the spool 4 in the belt extracting direction, so that the shear pin 84 is sheared by a high shear load.

More specifically, when the pawl 13 comes into engagement with the internal gear 19 of the frame 2 and the engage claws 83a of the clutch pawl 83 come into engagement with the internal gear 80b, the shear pin 84 is sheared. When the shear pin 84 is sheared, the clutch pawl 83 moves relative to the spool 4, toward the upstream position of rotation of the spool 4 in the belt extracting direction, with the engage claws 83a in engagement with the internal gear 80b, as indicated by the dotted line of Fig. 24. The clutch pawl 83 is thus brought into engagement between the support surface 4b of the support shaft 4a of the spool 4 and the spool-side gear 80, thereby stopping the relative movement to the spool 4. Thus the rotational connection between the spool 4 and the spool-side gear 80 in the belt extracting direction is firmly retained. Accordingly, as indicated by the arrow in Fig. 24, the rotation of the spool 4 in the belt extracting direction is transmitted to the spool-side gear 80 via the clutch pawl 83, so that the spool-side gear 80 rotates in the belt extracting direction as indicated by the arrow.

.. As shown in Figs. 22 and 23, the external gear 80a of the spool-side gear 80 is normally in engagement with the external gear 81a of the PFL-side gear 81. Accordingly, when the clutch mechanism 82 is in disconnection where the engage claws 83a of the clutch pawl 83 are out of engagement with the internal gear 80b, even when the spool 4 rotates in the belt extracting direction, the rotation is not transmitted to the spool-side gear 80, so that the spool-side gear 80, the PFL-side gear 81, and the rotation shaft 56 do not rotate. On the other hand, when the clutch mechanism 82 is in connection in which the engage claws 83a of the clutch pawl 83 are in engagement with the internal gear 80b and when the shear pin 84 is sheared, the rotation of the spool 4 in the belt extracting direction is transmitted to the spool-side gear 80, so that the spool-side gear 80 rotates in the same direction as the spool 4, while the PFL-side gear 81 and the rotation shaft 56 rotate in the opposite direction from the spool 4. In that case, the transmission speed ratio is only one, because the embodiment has only one power transmission system that transmits the rotation of the spool 4 to the rotation shaft 56.

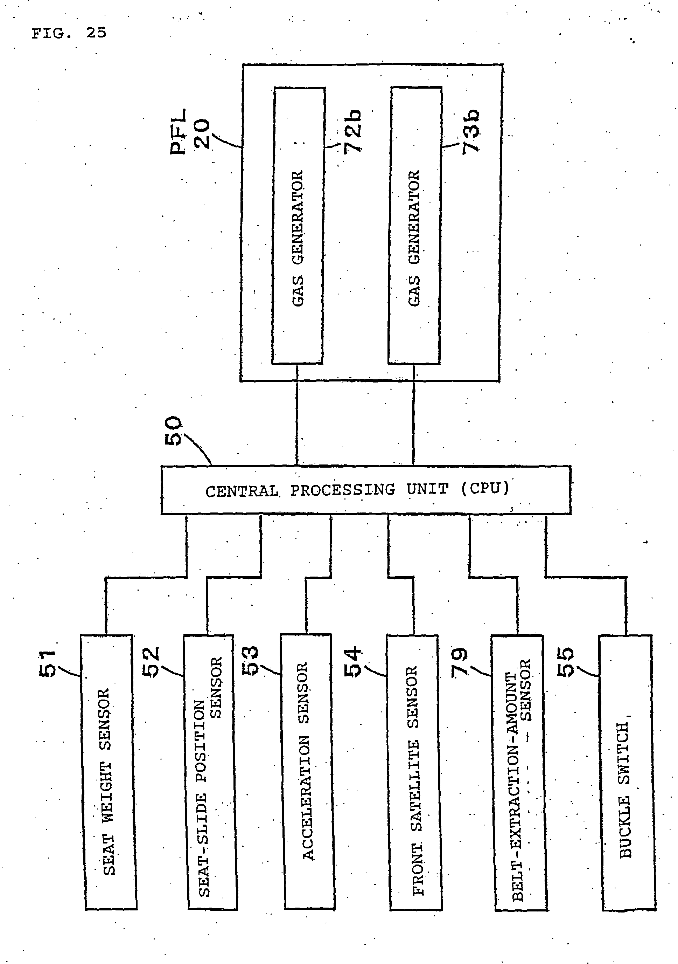

As shown in Fig. 25, the operation of the gas generators 72b and 73b of the PFL 20 according to the embodiment are controlled by the CPU 50 depending on the situation of emergency according to the output signals from the seat weight sensor 51, the seat-slide position sensor 52, the acceleration sensor 53, the front satellite sensor 54, the buckle switch 55 and the belt-extraction-amount sensor 79.

The other structures and operations of the seatbelt retractor 1 of this embodiment are the same as those of the embodiment of Figs. 6(a) and 6(b). In the embodiment of Figs. 6(a) and 6(b), the rotation shaft 56 rotates in the same direction as that of the spool 4. In contrast, the rotation shaft 56 in this embodiment rotates in the opposite direction from the spool 4. Therefore, the energy absorbing members 74 and 74' in the first and second EA mechanisms 68 and 69 are disposed in the opposite direction to the energy absorbing members 74 and 74' of the embodiment in Fig. 6(a) and 6(b). Accordingly, it is needless to say that the first support portions 74a and 74a', the second support portions 74b and 74b', and the U-shaped portions 74c and 74c' are disposed in the opposite direction to the embodiment of Figs. 6 (a) and 6 (b) .

With the seatbelt retractor 1 of this embodiment, there is no need to have the pivot lever 63 and the solenoid 67 of the embodiment of Figs. 6(a) and 6(b). Accordingly, the structure and the control by the CPU 50, shown in Fig. 13, can be simplified, so that the seatbelt retractor 1 can be manufactured at a lower cost than the embodiment in Figs. 6(a) and 6(b). Also, the gear-power transmission mechanism 57 and the clutch mechanism 82 can be made compact at low cost, because the clutch pawl 83 of the clutch mechanism 82 is housed inside the inner periphery of the ring-shaped spool-side gear 80.
The other advantages of the seatbelt retractor 1 of the embodiment are the same as those of the embodiment of Figs. 6 (a) and 6(b).

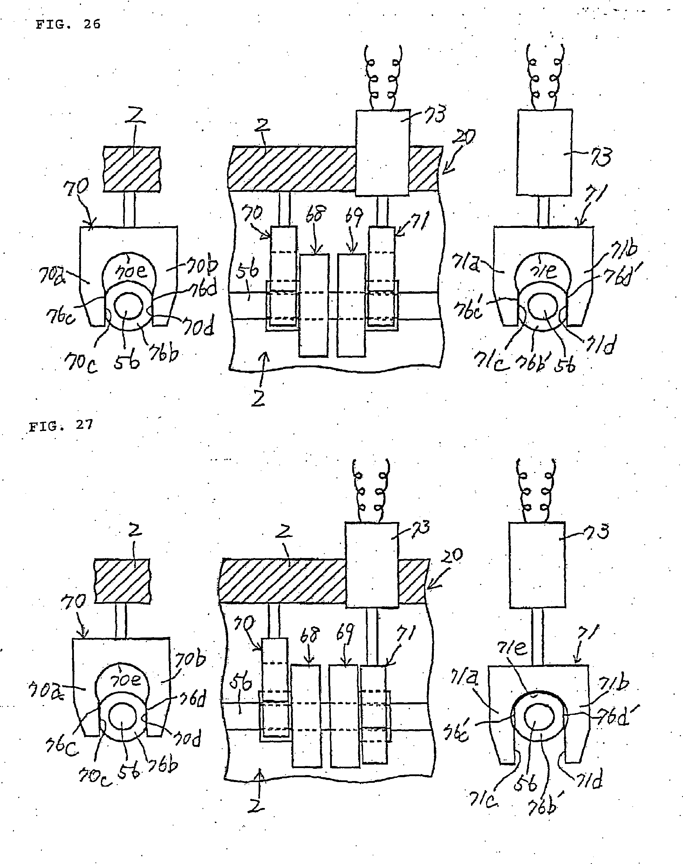

Fig. 26 is a schematic partial diagram of a seatbelt retractor according to still another embodiment of the invention, showing the first EA operation pattern, as with Fig. 14. Fig. 27 is a diagram of the second operation pattern of the embodiment of Fig. 26, as with Fig. 15.

In the embodiment of Figs. 6(a), the two operation control members 70 and 71 are driven by the drive members 72 and 73, respectively. However, as shown in Fig. 26, the PFL 20 of the seatbelt retractor according to the embodiment has no drive member 72. The operation control member 70 is fixed directly to the frame 2 and has no drive member 72 for the operation control member 70. In that case, the operation control member 70 is constructed such that the rotation stop portions 70c and 70d of the first arms 70a and 70b are set in the position opposed to the flat surfaces 76c and 76d of the cylinder 76d to stop the rotation of the energy-absorbing-member support member 76 normally.
The other structures of the seatbelt retractor are the same as those of the embodiment in Fig. 6(a).

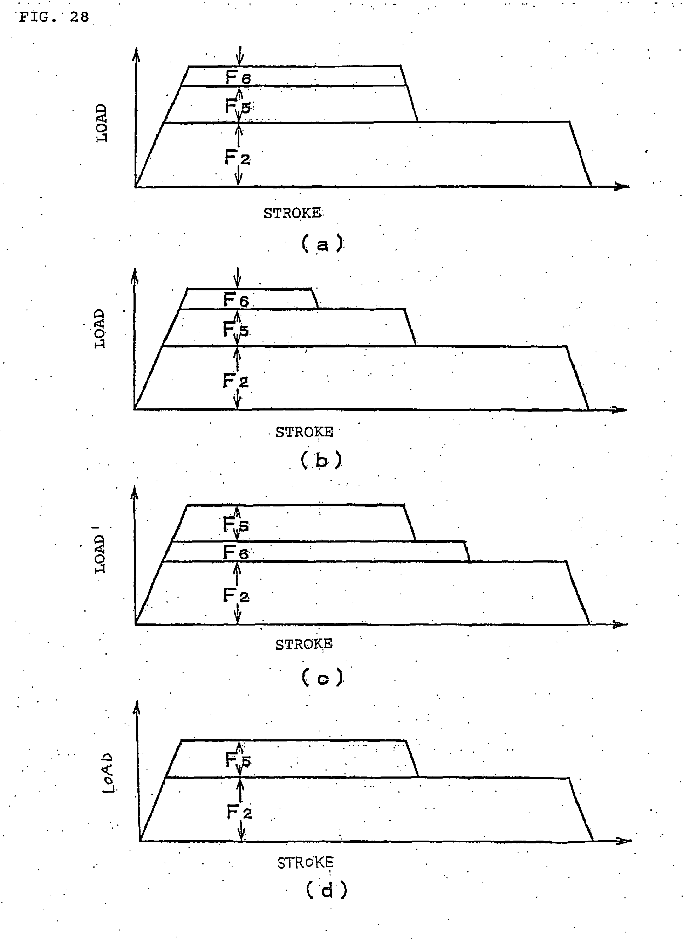

In the PFL 20 of this embodiment, the EA operation of the first EA mechanism 68 is the same as that of the first EA mechanism 68 where the drive member 72 in the embodiment of Fig. 6(a) does not operate. Accordingly, the EA operation of the first EA mechanism 68 is performed all the time during the time the EA operation by the energy absorbing member 74 is allowed. Thus, the EA operation pattern of the PFL 20 of this embodiment is changed only by the operation of the drive member 73 of the second EA mechanism 69. More specifically, since the EA operation is performed also by the second EA mechanism 69 with the drive member 73 in non-operation, the EA operation pattern becomes the same as the first EA operation pattern in Fig. 14. As shown in Figs. 28(a) to 28(c), in the first EA operation pattern, the FL load amounts to a total of the FL load F₂ by the EA operation of the torsion bar 7, the FL load F₅ by the EA operation of the first EA mechanism 68, and the FL load F₆ by the EA operation of the second EA mechanism 69, so that a relatively high energy can be absorbed.

When the drive member 73 operates, the EA operation pattern becomes the same as the second EA operation pattern shown in Fig. 15, because the EA operation by the second EA mechanism 69 is not performed. In the second EA operation pattern, the FL load amounts to a total of the FL load F₂ by the EA operation of the torsion bar 7 and the FL load F₅ by the EA operation of the first EA mechanism 68, so that a relatively low energy can be absorbed, as compared with the case in which the drive member 73 does not operate.

Various FL loads can be set by adjusting the operation timing for the drive member 73. Specifically, the operation timing for the drive member 73 with the FL load shown in Fig. 28(a) is adjusted to a timing to operate the drive member 73 to the completion of the EA operation by the energy absorbing member 74 of the first EA mechanism 68. The EA operation by the energy absorbing member 74 of the second EA mechanism 69 is completed by the operation of the drive member 73. In this case, the EA-operation allowable period by the energy absorbing member 74 of the second EA mechanism 69 is set longer than that by the energy absorbing member 74 of the first EA mechanism 68. However, the FL load shown in Fig. 28(a) can also be obtained by setting the EA-operation allowable period by the energy absorbing member 74 of the second EA mechanism 69 equal to that by the energy absorbing member 74 of the first EA mechanism 68.

The operation timing for the drive member 73 with the FL load shown in Fig. 28(b) is adjusted to a timing to operate the drive member 73 before the EA operation by the energy absorbing member 74 of the first EA mechanism 68 is completed. The FL load shown in Fig. 28 (b) can also be obtained by setting the EA-operation allowable period by the energy absorbing member 74 of the second EA mechanism 69 shorter than that by the energy absorbing member 74 of the first EA mechanism 68.

The operation timing for the drive member 73 with the FL load shown in Fig. 28(c) is adjusted to a timing to operate the drive member 73 after the EA operation by the energy absorbing member 74 is completed. In this case, the EA-operation allowable period by the energy absorbing member 74 of the second EA mechanism 69 must be set longer than the EA-operation allowable period by the energy absorbing member 74 of the first EA mechanism 68.
Furthermore, the operation timing for the drive member 73 with the FL load shown in Fig. 28(d) is adjusted to a timing to operate the drive member 73 at the same time that the EA operation by the torsion bar 7 and the EA operation by the first EA mechanism 68 are started.

In the control block of the PFL 20 of this embodiment, the gas generator 78 in Fig. 21 is replaced with the gas generator 73b. The operation of the gas generator 73b is controlled by the CPU 50 depending on the situation of emergency according to the output signals from the seat weight sensor 51, the seat-slide position sensor 52, the acceleration sensor 53, the front satellite sensor 54, the buckle switch 55, and the belt-extraction-amount sensor 79, as above.

Thus, the PFL 20 of this embodiment include only one drive member 78, thus having a simple structure and being reduced in cost as compared with the embodiment of Fig. 6(a). Although only two EA operation patterns by the drive member 73 can be set, different more FL loads can be obtained as compared with the embodiment of Figs. 19(a) and 19(b) by setting the operation timing for the drive member 73 appropriately.
The advantages of the seatbelt retractor 1 of this embodiment are the same as those of Fig. 6(a).

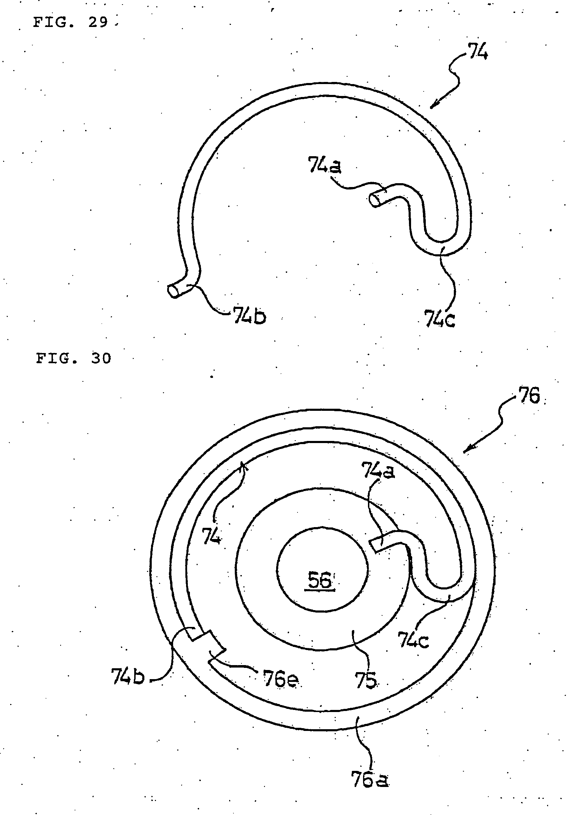

In the embodiments of Figs. 6 to 22, the energy absorbing member 74 is a belt-like plate. The invention, however, is not limited to that but may be a wire rod substantially in C-shape as a whole, as shown in Fig. 29. In that case, also the energy absorbing member 74 made of a wire rod has the U-shaped portion 74c in the vicinity of the first support portion 74a and disposed as with the belt-like planar energy absorbing member 74 of the above embodiments. Different FL loads can be obtained by varying the thickness of the wire rod.

In the embodiments of Figs. 6 to 29, the second support portion 74b of the energy absorbing member 74 is bent and slidably passed through the cylindrical portion of the closed-end cylinder 76a of the energy-absorbing-member support member 76. The invention, however, is not limited to that but may be constructed such that a projection 76e is provided on the inner circumference of the closed-end cylinder 76a, by which the end of the unbent second support portion 74b is supported, as shown in Fig. 30. It is needless to say that also the energy-absorbing-member support member 76' of the second EA mechanism 69 has a projection similar to the projection 76e of the first EA mechanism 68, on the inner circumference of the closed-end cylinder.

In the embodiments of Figs. 6 to 24, the torsion bar 7 is used as the first seatbelt-load limit mechanism. In place of the torsion bar 7, the EA mechanism disclosed in Patent Documents 2 to 6 can be used. As the first seatbelt-load limit mechanism, the EA mechanism applied for a patent by the present applicant can be used in which the plate-like energy absorbing member on the locking-base side is cut by the cutting projection on the spool side (JP-A-2004-249968).
In the embodiments of Figs. 6 to 22, the limit-load setting means of the invention has two energy absorption mechanisms, the first and second EA mechanisms 68 and 69. There may be provided any number, one or more, of energy absorption mechanisms.

The seatbelt retractor of the invention is used for seatbelt systems mounted to vehicles such as cars, which can appropriately be used in seatbelt retractors that stop extraction of seatbelts while absorbing impact energy to the occupants by limiting the load applied to the seatbelts in an emergency such as a crash.

## Claims

1. A seatbelt retractor comprising: at least a spool for retracting a seatbelt; a locking mechanism including a locking member that rotates normally with the spool by the transmission of the rotation of the spool via a rotation transmission shaft and stops the rotation in the seatbelt extracting direction; and first and second seatbelt-load limit mechanisms for limiting the load applied to the seatbelt when the rotation of the locking member in the seatbelt extracting direction is stopped and the spool rotates relative to the locking member in the seatbelt extracting direction, wherein
the second seatbelt-load limit mechanism comprises limit-load setting means for setting a limit load for the seatbelt and limit-load control means for controlling the limit-load setting means so as to vary the limit load of the seatbelt in an emergency depending on emergency situation.

2. The seatbelt retractor according to Claim 1, wherein the second seatbelt-load limit mechanism varies the limit load of the seatbelt in an emergency depending on information on emergency situation such as occupant's physique information, seat-slide position information, crash-speed information, crash acceleration or deceleration information, and crash situation information.

3. The seatbelt retractor according to Claim 1 or 2, wherein the first seatbelt-load limit mechanism is one of a load limit mechanism in which a torsion bar disposed between the spool and the locking member and constructing the rotation transmission shaft is twisted into deformation, a load limit mechanism in which a wire rod provided on one of the spool side and the locking member side is rubbed with an engage pin provided on the other of the spool side and the locking member side, a load limit mechanism in which a belt-like plate one end of which is provided on one of the spool side and the locking member side is forced to be deformed with a guide groove provided on the other of the spool side and the locking member side, a load limit mechanism in which a cylindrical member provided on one of the spool side and the locking member side is elastically deformed by a retaining portion provided on the other of the spool side and the locking member side, a load limit mechanism in which a U-shaped flat plate material or a U-shaped wire rod is deformed, one end of which is provided on one of the spool side and the locking member side and the other end is in engagement with the other of the spool side and the locking member side, a load limit mechanism in which a shear pin provided between the spool and the locking member is sheared, a load limit mechanism in which a portion provided on one of the spool side and the locking member side is cut with a cutting edge provided on the other of the spool side and the locking member side, and a load limit mechanism in which a plate-like energy absorbing member provided on one of the spool side and the locking member side is cut with a cutting projection provided on the other of the spool side and the locking member side.

4. The seatbelt retractor according to any one of Claims 1, 2, or 3, wherein three-stages of load modes are set for the limit load, the three-stage modes being a load mode by the non-operation of the limit-load setting means, a low-load mode, and a high-load mode.

5. The seatbelt retractor according to any one of Claims 1 to 4, wherein the first seatbelt-load limit mechanism comprises:
a rotation shaft rotating by the rotation of the rotation transmission shaft transmitted via a power transmission mechanism in an emergency, the rotation shaft having the second seatbelt-load limit mechanism; wherein
the limit-load setting means of the second seatbelt-load limit mechanism comprises a predetermined number of energy absorption mechanisms; and
the second seatbelt-load limit mechanism comprises at least one operation control member for controlling the operation of the predetermined number of energy absorption mechanisms and a drive member provided so as to correspond to the operation control member, for driving the operation control member.

6. The seatbelt retractor according to any one of Claims 1 to 4, wherein the first seatbelt-load limit mechanism comprises:
a rotation shaft rotating by the rotation of the spool transmitted via a power transmission mechanism in an emergency, the rotation shaft having the second seatbelt-load limit mechanism; wherein
the limit-load setting means of the second seatbelt-load limit mechanism comprises a predetermined number of energy absorption mechanisms; and
the second seatbelt-load limit mechanism comprises at least one operation control member for controlling the operation of the predetermined number of energy absorption mechanisms and a drive member provided to correspond to the operation control member, for driving the operation control member.

7. The seatbelt retractor according to Claim 6, wherein the power transmission mechanism comprises: a spool-side gear to which the rotation of the spool at least in the seatbelt extracting direction is transmitted; a clutch mechanism disposed between the spool and the spool-side gear, the clutch mechanism normally disconnecting the spool and the spool-side gear and rotatably connecting the spool and the spool-side gear at least in the seatbelt extracting direction in the emergency; and a rotation-shaft-side gear disposed to the rotation shaft, the rotation-shaft-side gear being rotatable with the rotation shaft and normally in engagement with the spool-side gear.

8. The seatbelt retractor according to Claim 7, wherein
the spool-side gear is shaped like a ring including an external gear and an internal gear normally in engagement with the rotation-shaft-side gear, and
the clutch mechanism comprises a clutch pawl supported by the spool and a shear pin supporting the clutch pawl and being sheared in an emergency, wherein the shear pin is disposed to an interlocking member interlocking with the operation of the locking mechanism and wherein the clutch pawl is activated by the operation of the locking mechanism to come into engagement with the internal gear of the spool-side gear and to shear the shear pin, so that the rotation of the spool is transmitted to the spool-side gear.

9. The seatbelt retractor according to any one of Claims 1 to 8, wherein the limit-load setting means comprises a belt-like flat plate or a wire rod including a U-shaped portion and setting the limit load by deforming the U-shaped portion toward the terminal.

10. The seatbelt retractor according to any one of Claims 5 to 9, wherein the drive member comprises a gas generator or a solenoid for activating the operation control member.

11. The seatbelt retractor according to any one of Claims 1 to 10, wherein the limit-load setting means for varying the limit load sets a plurality of load-limit operation patterns, wherein in the load-limit operation patterns, the magnitude of the limit load is set depending on emergency situation such as occupant's physique, seat-slide position, crash-speed information, crash acceleration or deceleration, and crash situation.

12. The seatbelt retractor according to any one of Claims 1 to 10, wherein the limit-load setting means for varying the limit load varies the limit load of the seatbelt in advance according to the information on emergency situation that can be acquired in advance.

13. A seatbelt system comprising the seatbelt retractor according to one of Claims 1 to 12.
